(19) Europäisches Patentamt / European Patent Office / Office européen des brevets

(11) **EP 4 556 706 A1**

(12) **EUROPEAN PATENT APPLICATION**

(43) Date of publication:
**21.05.2025 Bulletin 2025/21**

(21) Application number: **24213107.6**

(22) Date of filing: **14.11.2024**

(51) International Patent Classification (IPC):
**F03B 13/18** (2006.01)    **F03B 13/14** (2006.01)
**H02N 1/04** (2006.01)

(52) Cooperative Patent Classification (CPC):
**F03B 13/187; F03B 13/142; H02N 1/04;**
F05B 2220/706; F05B 2220/709; F05B 2240/95

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.11.2023  SE 2330510**

(71) Applicant: **Li, Jiantong
13233 Saltsjö-Boo (SE)**

(72) Inventor: **Li, Jiantong
13233 Saltsjö-Boo (SE)**

(74) Representative: **AWA Sweden AB
Matrosgatan 1
Box 5117
200 71 Malmö (SE)**

(54)    **A WAVE ENERGY CONVERTER**

(57)    There is provided a wave energy converter (100) comprising a liquid medium (110) and a droplet electricity generator arrangement (120) comprising a primary droplet electricity generator (122). The wave energy converter further comprise means for using ocean waves (300) to enable droplets of the liquid medium (110) to engage with a triboelectric surface (122a) of the primary droplet electricity generator (122) to generate power, wherein the liquid medium (110) is comprised within a closed system of the wave energy converter (100).

Fig. 2

**Description**

*Technical field*

The present invention relates to a wave energy converter (WEC) for extracting energy from ocean waves.

*Technical background*

Ocean wave power is a stable, predictable and plentiful renewable energy source. The exploitation of ocean wave power can greatly contribute to fossil-free electricity production and hence global sustainability. It is also expected to play a role in future electricity production market. However, the present wave energy converters (WECs) are mainly based on electromagnetic generators. The WECs are thereby bulky and can only prove efficient in energetic oceans (with large and strong waves). It is difficult and expensive to install and maintain them in the corrosive and energetic marine environment. Recent research has been using triboelectric nanogenerators to replace the conventional electromagnetic generators in ocean wave power technologies. But in general it is challenging to develop scalable manufacturing processes for the triboelectric nanogenerators. Their efficiency is also strongly environment-dependent, especially in consideration that the high humidity in the marine environment may strongly diminish the triboelectric effects and significantly reduce the energy conversion efficiency. Very recently, water droplet-based electricity generators (DEGs) have been invented which are using water droplets to impinge triboelectric polymer surface to generate instantaneous (pulsed) electricity with peak voltage > 150 V and current around 1 mA, and effective (average) power density > 300 W/m^2, outperforming the present commercial solar panels (about 200 W/m^2). As DEGs can work in humid environments, they have been proposed for ocean wave power technology. However, the unpredictability of wave magnitude and the harsh ocean environment is unfavourable for promoting sustainable long-term operation with stable output for predictable or unintermitted electricity production. Accordingly, there is a demand for an improved wave energy converter acting in an ocean environment to promote sustainable long-term stable operation.

*Summary of the disclosure*

At least some of the above mentioned drawbacks are at least partly overcome by the present disclosure according to the independent claims. Preferred embodiments are set forth in the dependent claims. It would be advantageous to provide a wave energy converter; hereinafter referred to as "WEC", comprising a droplet electricity generator; hereinafter referred to a "DEG", with an improved capacity to provide sustainable long term operation in an ocean environment. To better address this concern, in accordance with a first aspect of the disclosure, there is provided a WEC comprising a liquid medium and a droplet electricity generator arrangement (DEG arrangement). The DEG arrangement comprises a primary DEG. The WEC further comprises means for using ocean waves to enable droplets of the liquid medium to engage with a triboelectric surface of the primary DEG to generate power. The liquid medium is comprised within a closed system of the WEC. The inventive concept is based on the realization that by isolating the liquid medium within a closed system from the surrounding seawater, it is possible to ensure that the liquid medium remains in an optimal working condition for the primary DEG. As opposed to a WEC which directly uses seawater to power its DEGs, the present disclosure is enabled to reduce, or even entirely remove, wear and damage on the primary DEG directly caused by corrosive seawater from an ocean environment. This also removes the risk of the primary DEG being exposed to damaging pollutants, planktons or microorganisms from the ocean and thus extending the life span of the WEC. Further, by not using seawater, but a liquid medium which is enabled to comprise a carefully regulated composition of liquid, to generate power from the primary DEG, it is possible to maintain the liquid medium in state that promotes maximum output performance and even further minimizes wear of the DEG. This increases the potential power output from the disclosure. By the term output performance it may be meant the efficiency and effectiveness of a liquid in converting the kinetic energy of falling droplets into electrical energy. Furthermore, a WEC leading seawater from ocean waves directly into a container comprising a DEG for extracting energy, may often be subject to the problem of being overfilled due to big waves. This in turn may cause DEGs inside such a container to lack drainage and thus submerged in seawater and inactivated, preventing them from extracting energy. In contrast to this, the present disclose, by utilising a liquid medium within a closed system for generating power with the primary DEG, is able to overcome this problem. This because the volume of liquid medium within the closed system may be set so to avoid the risk of inactivation of a DEG due to it being submerged in seawater. This is a key factor of the present disclosure which ensure a sustainable and consistent energy generation process regardless of the size of the ocean waves. By the phrase droplets of the liquid medium engages with a triboelectric surface of the primary DEG to generate power it may be meant that droplets interact with the triboelectric surface so that the primary DEG is able to produce output power. Droplets may impinge the triboelectric surface to generate output power. Alternatively, the droplet may slide over the triboelectric surface. By impinge a surface it may be meant to fall on, to strike on, or to hit a surface.

In accordance with an embodiment, the DEG arrangement comprises a plurality of primary DEGs. This is advantageous for increasing the WEC's capacity to extract energy from ocean waves.

In accordance with an embodiment, the liquid medium comprises water. This is advantageous because when used for DEGs, water efficiently converts the kinetic energy of falling droplets into electrical energy, providing a significant power output with a minimal environmental impact. Furthermore, water is advantageously used for DEGs because its temperature resistance can be modified by adding substances like salt, allowing the present disclosure to function efficiently in diverse environmental conditions and enhancing its overall performance and reliability. Additionally, water is abundant, renewable, and safe to handle.

In accordance with an embodiment, the droplets of the liquid medium engage with the triboelectric surface by impinging it. Thereby, the droplet is able to, by a forceful impact, fall on the triboelectric surface to generate output power.

In accordance with an embodiment, the means for using ocean waves to enable droplets of the liquid medium to engage with the triboelectric surface of the primary DEG comprises a liquid pump. A liquid pump is advantageously utilised for moving water from a position below the primary DEG to a position above it. When powered by energy from ocean waves, the liquid pump can efficiently transport water upwards.

In accordance with an embodiment, the liquid pump is fixedly coupled to a fixture or to mobile object such as a buoy. Having the liquid pump fixedly coupled to a fixture is advantageous providing a secure and stable base for the WEC. This helps the WEC to withstand the constant motion and force of the waves, ensuring consistent energy generation and reducing the risk of damage. Alternatively, having the liquid pump fixedly coupled to a mobile object, such as ship, a mobile platform, or a buoy, enables the WEC to be moved to different locations to capture the most efficient wave energy. In addition, the WEC can be brought to shore or to a maintenance facility more easily, simplifying repairs and minimizing downtime. Additionally, having it connected to a buoy makes it more useful in off-shore applications.

In accordance with an embodiment, the means for using ocean waves to enable droplets of the liquid medium to engage with the triboelectric surface of the primary DEG comprises a float which is arranged to be movable in a vertical direction with the ocean waves relative to the liquid pump. Using a float moving on the ocean surface efficiently converts the vertical motion of ocean waves into electrical energy by utilizing the natural rise and fall of ocean waves.

In accordance with an embodiment, the WEC comprises a restrictive part for restricting the float to only be movable along a vertical direction. Restricting the float to vertical motion may enable the WEC to more effectively extract kinetic energy of ocean waves, which typically is very consistent and powerful in the vertical direction. Furthermore, as opposed to a float moving both vertically and horizontally, a focused movement in the vertical direction may reduce mechanical stress on the float and the components coupled thereto, potentially lowering maintenance costs and extending the components lifespan.

In accordance with an embodiment, the DEG arrangement comprises a primary droplet generator for turning the liquid medium into droplets. The primary droplet generator may advantageously be used to generate droplets of the liquid medium that engage with the primary DEG. The primary droplet generator may advantageously be arranged to provide a droplet of the liquid medium in a desired volume.

In accordance with an embodiment, the DEG arrangement further comprises a secondary droplet generator for producing droplets of the liquid medium, and a secondary DEG, wherein each of the secondary droplet generator and the secondary DEG is positioned below the primary DEG. Thereby, a droplet of the liquid medium, after falling on the primary DEG, may reform and thereafter fall to impinge the secondary DEG. This is advantageous for enabling a single droplet of liquid medium to fall on multiple DEGs and thereby increasing the generated output power of the DEG arrangement.

In accordance with an embodiment, the DEG arrangement comprises a top tank for holding at least a portion of the liquid medium and which is positioned above the primary droplet electricity generator. The top tank is advantageous for ensuring a stable supply of droplets for the primary DEG, despite irregular ocean waves. Having a top tank may be further advantageous because the column of liquid medium inside the top tank pressurizes droplets as they fall on the primary DEGs. This increased pressure boosts the kinetic energy of the falling droplets and thus reduces the required falling distance to generate sufficient power output when engaging with the one or more triboelectric surface.

In accordance with an embodiment, the DEG arrangement comprises a bottom tank for holding at least a portion of the liquid medium and which is positioned below the primary droplet electricity generator. The bottom tank is advantageous for holding liquid medium, ensuring continuous operation of the DEG arrangement. In addition, it allows for a collection of liquid medium making it easier for a liquid pump, for example, to pump water back up to a position above the primary DEG.

In accordance with an embodiment, the WEC comprises a pipe arrangement for transporting the liquid medium from the bottom tank to the top tank. The pipe arrangement may advantageously be used to enable the liquid medium to be transported from a location below the primary DEG to a location above it, for example from the bottom tank to the top tank. Present DEGs are based on impinging water droplets on planar triboelectric films or surfaces. The impinging process includes several steps (droplet spread, retraction, and bounce) and requires a long contact time (> 10 ms) to finish. This is a limiting factor for the working frequency of the DEGs and hence also their output power. In addition, the droplet spread step requires a large contact area on the triboelectric surface to avoid interference with the neighbouring droplets. This significantly limits the power density (output power per unit area). To address these two critical challenges, in accordance with an embodiment of the present disclosure, the droplets of the liquid medium engage with the triboelectric surface by sliding over it and the triboelectric surface of the primary DEG has a tubular shape. Thus, when a droplet of the liquid medium drops into the tubular triboelectric surface, it slides within the inner tube surface so generate energy of the primary DEG. Furthermore, as opposed to a planar triboelectric surface, by providing a tubular triboelectric surface the droplet can move through the tubular triboelectric surface by a sliding motion. As a result from this, the contact time between the droplet and triboelectric surface is significantly reduced and the output power of every primary DEG may be increased. In addition, the droplet spread step is avoided so that the lateral contact area is restricted to the tube cross section, which improves the power density of the primary DEG. By power density it may be meant the measure of output power generated per unit area. Even further, providing a tubular triboelectric surface is also advantageous for scaling since a secondary DEG may be placed just below the primary DEG so that the tubular triboelectric surfaces of the primary DEG and the secondary DEG forms a continuous tube. Or alternatively, one continuous tubular triboelectric surface may be used for multiple DEGs. Since every droplet is working within a tube, there is no mutual interference between neighbouring droplets of neighbouring DEGs, which is a big issue in planar DEG arrays. The tubular DEG arrays can also be readily integrated into the DEG arrangement to connect the top tank and bottom tank.

In accordance with an embodiment, the tubular triboelectric surface of the primary DEG has a longitudinal extension from a first and to a second end, wherein the second end is closed. This is advantageous for maintaining an internal pressure between a droplet of liquid medium inside the tubular triboelectric surface and the second end of the tubular triboelectric surface. As a result, the droplet can slide back and forth within the tubular triboelectric surface based on an alternating pressure entering the tubular triboelectric surface from the first end. This movement is advantageous as energy is generated from the primary DEG every time the droplet passes a DEG electrode. A DEG electrode may refer to a component in the DEG that captures electrical charge generated when the at least one droplet of liquid medium engages with the triboelectric surface to convert kinetic energy into electrical energy. In this embodiment, the at least one droplet may engage with the triboelectric surface by sliding over it. Additionally, the droplet is prevented from falling out at the second end of the tubular triboelectric surface.

In accordance with an embodiment, the means for using ocean waves to enable droplets of the liquid medium to engage with the tubular triboelectric surface of the primary DEG comprises an oscillating water column chamber; hereinafter referred to as the OWC chamber, arrangeable so that an internal air pressure in the OWC chamber increases in response to an ocean wave entering the OWC chamber and wherein the increase of air pressure in the OWC chamber pressurizes a droplet of the liquid medium so to slide over the tubular triboelectric surface of the primary DEG. From this, the pressure at the first end of the tubular triboelectric surface can be varied by the ocean waves, allowing ocean waves to drive the sliding movement of the droplet within the tubular triboelectric surface. By the droplet sliding over the tubular triboelectric surface it may be meant that the droplet slides within the tube.

In accordance with a second aspect of the disclosure, there is provided there is provided an ocean wave converter. Our ocean wave converters comprise working water (or other suitable liquid medium) with optimized salt concentration to maximize the DEG performance, a float, a water pump, a DEG box containing multiple tiers of droplet generators and DEGs, and pipes to connect the pump and the DEG container to form a closed system for the working water. During operation, the float is floating on ocean surface, moves up and down with the ocean wave, drives the water pump to pump working water from the bottom of the DEG container to the top. The working water at the container top is turned to droplets by the droplet generators, powers the DGEs at all the tiers, and drops down to the container bottom. Then, the working water at the bottom was pumped up by the water pump for a new cycle to realize sustainable long-term electricity generation.

Several advantages are identified:

(1) The closed water cycle ensures sustainable long-term operation of the DEGs.
(2) Any type of working water (or other liquid medium) can be used in the closed water to optimize the DEG performance.
(3) The working water system is isolated from the surrounding oceans. It is not impacted by the ocean environment and vice versa.
(4) The bottom and top water buffer tanks ensure stable supply of droplets for DEGs, despite the generally irregular ocean waves.
(5) Vertical stacking of up to 25-50 (5-10 m/20 cm) tiers of DEGs to increase areal output power.
(6) Multiple levels of pumps can be used to increase water level to > 10 m and DEG tiers > 50.

Effects and features of the second aspect are largely analogous to those described above in connection with the first aspect. Embodiments mentioned in relation to the first aspect are largely compatible with the second aspect. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

## Brief description of the drawings

The disclosure is described in the following illustrative and non-limiting detailed description of exemplary embodiments, with reference to the appended drawings, wherein:

Fig. 1-2 are schematic illustrations of a wave energy converter according to different embodiments of the present disclosure.
Fig. 3 is a schematic illustration of a primary droplet electricity generator according to an embodiment of the present disclosure.
Figs. 4a-f are schematic illustrations of a power management module according to an embodiment of the present disclosure.
Figs. 5-7 are schematic illustrations of a wave energy converter according to different embodiments of the present disclosure.
Fig. 8 is a schematic illustration of a tubular primary droplet electricity generator according to an embodiment of the present disclosure.
Figs. 9-10 are schematic illustrations of a wave energy converter according to different embodiments of the present disclosure.
Figs. 11a-11b are schematic illustrations of a liquid pump.

## Detailed description of embodiments

Hereinafter, the disclosure in various aspects will be described with reference to the illustrative drawings. All figures are schematic, not necessarily to scale, and generally only show parts which are necessary in order to elucidate the disclosure, wherein other parts may be omitted or merely suggested. Throughout the figures the same reference signs designate the same, or essentially the same features. Various elements and arrangements are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

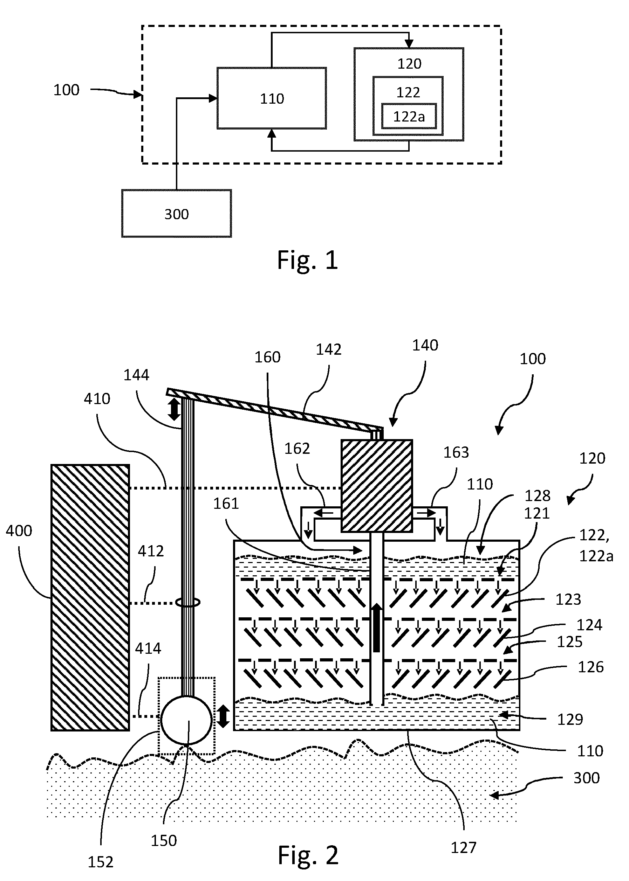

Fig. 1 shows a WEC 100 comprising a liquid medium 110 and a DEG arrangement 120. The DEG arrangement 120 comprises a primary DEG 122. The primary DEG 122 comprises a triboelectric surface 122a. The triboelectric surface 122a is a triboelectric film (e.g., PTFE film). An electrical charge is generated in the primary DEG 122 when a droplet of the liquid medium 110 engage with the triboelectric surface 122a. The liquid medium 110 may be any suitable liquid for use with a DEG. The WEC 100 is arranged so that the liquid medium 110 is contained within a closed system. That is, the liquid medium 110 is contained within a system that do not allow other liquid to enter or leave. Energy may still be exchanged. The WEC 100 further comprises means for using ocean waves 300 to enable droplets of the liquid medium 110 to engage with the triboelectric surface 122a of the primary DEG 122. The means for using ocean waves 300 to enable droplets of the liquid medium to engage the triboelectric surface 122a of the primary DEG 122 may for example be a float moving with waves to drive a liquid pump, pumping the liquid medium 110 so droplets are formed and impinge the triboelectric surface 122a of the primary DEG 122. Alternatively, the means for using ocean waves 300 to enable droplets of the liquid medium to engage with the triboelectric surface 122a of the primary DEG 122 may comprise an oscillating water column (OWC) chamber with an alternating pressure, which pressure alteration is caused by ocean waves. The altering pressure in the OWC chamber thereafter enables droplets of the liquid medium to engage with, in this case to slide over, the triboelectric surface 122a to generate output power. In the shown embodiment, energy from the ocean waves 300 powers the movement of the liquid medium 110 so that droplets of the liquid medium engage with the triboelectric surface 122a of the primary DEG 122. Thereby, the WEC 100 extract energy from ocean waves by generating droplets of the liquid medium 110 to engage with the triboelectric surface 122a so that energy is generated in the primary DEG 122.

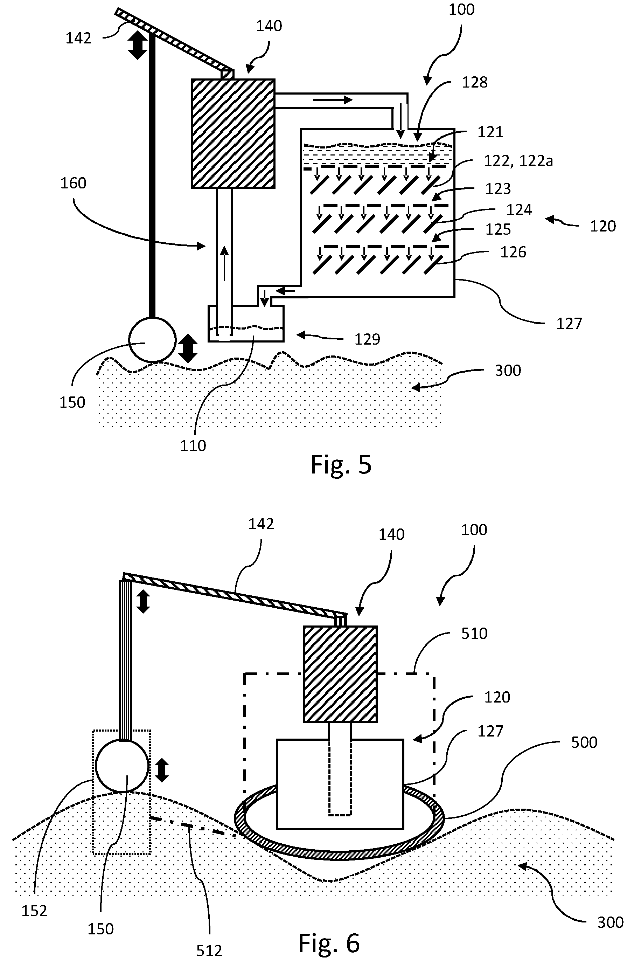

Now with reference to Fig. 2, a further embodiment of the WEC 100 is shown comprising a liquid medium 110 and a DEG arrangement 120. In this embodiment, the liquid medium 110 is water with an optimized salt concentration to maximize the DEG performance. The liquid medium 110 may be any type of water such as tap water, deionized water, and seawater, as well as their mixture. Alternatively, the liquid medium 110 may be any other suitable conductive liquid medium, for example liquid electrolyte consisting of inorganic or organic salts, acids or alkaline, as well as their mixtures dissolved in water or organic solvents, or liquid metal. Examples of liquid electrolytes that may be used are sodium chloride (NaCl), potassium chloride (KCl), lithium chloride (LiCl), calcium chloride (CaCl$_2$), lithium sulphate (Li$_2$SO$_4$), potassium hydroxide (KOH), phosphoric acid (H$_3$PO$_4$), sulfuric acid (H$_2$SO$_4$), poly(3,4-ethylenedioxythiophene):polystyrene sulfonate (PSSH), and lactic acid, as well as their mixtures, dissolved in water or organic solvents such as propylene carbonate (PC), ethylene carbonate (EC), diethyl carbonate (DEC) and acetonitrile, as well as their mixtures. Examples of liquid metals may be used are liquid mercury (Hg [I]), liquid gallium (Ga [I]), liquid cesium (Cs [I]), liquid rubidium (Rb [I]) or liquid francium (Fr [I]), as well as metal alloys such as gallium-based alloys. The concentration of salt in the liquid medium may be altered to make it more resistant to low temperatures. The DEG arrangement 120 may comprise multiple tiers of droplet generators and DEGs. In the shown embodiment, the DEG arrangement 120 comprises a first tier of a plurality of a primary DEG 122, a second tier of a plurality of a secondary DEG 124, and a third tier of a plurality of tertiary DEG 126. Furthermore, the DEG arrangement 120 comprises a plurality of a primary droplet generator 121 above the primary DEGs 122, a plurality of a secondary droplet generator 123 above the secondary DEG 124, and a plurality of tertiary droplet generator 125 above the tertiary DEGs 126. The shown embodiment comprises a plurality of primary, secondary, and tertiary DEGs; however, it is conceivable that only a single DEG could be used at each tier. Additionally, while three tiers are depicted, any number of tiers could be utilized. For example, the DEG arrangement 120 may comprise up to 25-50 tiers. It is conceivable that it comprises more tiers. A preferable falling distance for a droplet of the liquid medium 110 may be typically in the range of around 5 to 35 centimetres (cm), preferably 15 to 30 cm, preferably 20 to 25 cm, as this range allows the droplet to gain sufficient kinetic energy for efficient energy conversion upon impact. Thereby, the vertical distance between tiers may preferably be around 20 centimetres. A preferable falling distance for a droplet of the liquid medium 110 may be 10 to 30 centimetres (cm). It is conceivable that the droplet may fall for longer than 30 cm. It is conceivable that the droplet may fall less than 10 cm, less than 5 cm. The minimum distance is dependent on the droplet of liquid medium 110 being able to gain sufficient kinetic energy to generate energy when it comes into contact with the triboelectric surface. Thus, in principal the falling distance may be as small as around 1 cm. The DEG arrangement 120 comprises a housing 127 which houses the droplet generators 121, 123, 125, and the DEGs 122, 124, 126. The housing 127 is waterproof and corrosion-resistant, designed to shield internal components from seawater and harsh marine environments. Additionally, it may be insulated to protect against cold temperatures. In this embodiment, the DEG arrangement 120 comprises a top tank 128 for holding at least a portion of the liquid medium 110. The top tank 128 may be any type of container capable of holding liquid. The top tank 128 is positioned above the droplet generators 121, 123, 125 and the DEGs 122, 124, 126 allowing liquid medium 110 to flow down from the top tank 128 to the primary droplet generators 121. In this embodiment, the DEG arrangement 120 comprises a bottom tank 129 for holding at least a portion of the liquid medium 110. The bottom tank 129 may be any type of container capable of holding liquid. The bottom tank 128 is positioned bellow the droplet generators 121, 123, 125 and the DEGs 122, 124, 126 so that droplets of the liquid medium 110 falling of the DEGS are collected in the bottom tank 129. In the shown embodiment, the top tank 128 and the bottom tank 129 are housed in the housing 127. In an alternative embodiment the bottom tank may be external to the housing 127, for example as shown in Fig. 5. The droplet generators 121, 123, 125 may be any type of droplet generators that produce liquid droplets of a volume of at least 1 μL, at least 5 μL, at least 10 μL, at least 50 μL, at least 100 μL, at least 500 μL, at least 1 mL, at least 5 mL, at least 10 mL, at least 50 mL, at least 100 mL. The liquid droplets may be of a volume between 1 μL and 100 mL, between 1 μL and 50 mL, between 1 μL and 10 mL, between 1 μL and 1 mL, between 1 μL and 100 μL, between 1 μL and 50 μL, between 10 μL and 50 μL. The liquid droplets may be of a volume between 1 mL and 100 mL, between 1 mL and 50 mL, between 1 mL and 10 mL, between 10 mL and 100 mL between 50 mL and 100 mL. The liquid droplets may preferably be of a volume between 1 μL and 1 mL. The liquid droplets may preferably be of a volume between 100 μL and 1 mL. For example, the droplet generators 121, 123, 125 may be small channels at the bottom of a liquid tank which ends with small nozzles. The nozzle diameter may be tailored with respect to the surface tension of the liquid medium 110 and/or the pressure acting on liquid medium 110 before entering the droplet generators 121, 123, 125, so as to enable continuous jetting of liquid drops, as opposed to liquid lines. The pressure acting on the liquid medium may derive from the height of the liquid medium 110 located in the top tank 128.

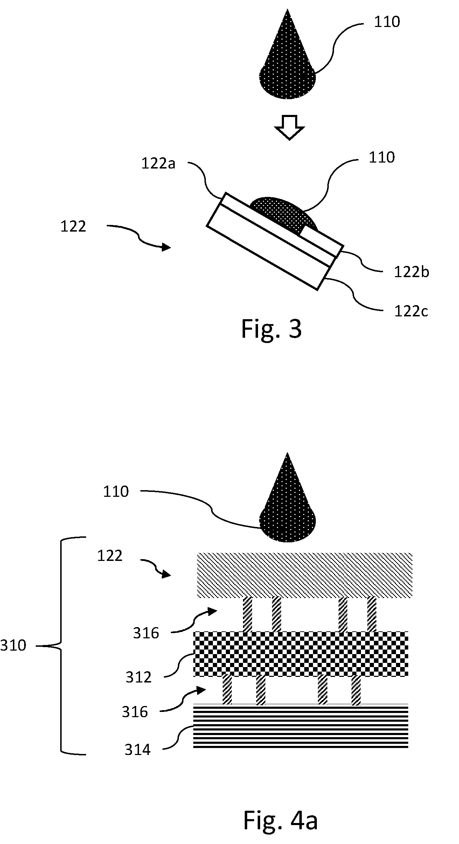

Fig. 3 shows the primary DEG 122. Furthermore, the shown DEG represents the secondary DEG 124 and the tertiary DEG 126 as well. The primary DEG 122 comprises the triboelectric surface 122a. In this embodiment the triboelectric surface 122a is a planar surface. Alternatively, the triboelectric surface 122a may be curved. The triboelectric surface 122a may be any type of triboelectric film, e.g., PTFE film. The primary DEG 122 further comprises a first electrode 122b and a second electrode 122c. Both the first and the second electrodes comprises graphene. The first and second electrodes 122b, 122c may preferably be made of any non-metal conductive materials, such as conductive carbon

(graphite, graphene, carbon black, carbon nanotubes, etc.), or a conducting polymer (polythiophene [PTh], poly(3,4-ethylenedioxythiophene) polystyrene sulfonate [PEDOT:PSS], polyaniline [PANI], polyacetylene [PA], polypyrrole [Ppy], etc.), or a conductive metal compound, or a metal material with proper encapsulation. This is to avoid corrosion at the marine environment. It may be expressed as the second electrode 122c is coated with the triboelectric surface 122a comprising a polytetrafluoroethylene (PTFE) film. When a droplet of the liquid medium 110 engage with, or in this embodiment, impinge the triboelectric surface 122a, it spreads out and naturally forms a bridge between the first electrode 122b and the second electrode 122c. The droplet bridge creates a closed-loop electric circuit, allowing charges accumulated in the triboelectric surface 122a to be released, generating an electric current. The triboelectric surface 122a is advantageously tilted to enable the droplet of the liquid medium 110 to, after the charge transfer has been made and the droplet has retracted into a spherical shape (due to the hydrophobic nature of the triboelectric surface 122a), move off the primary DEG 122. The droplet may then further fall onto the secondary DEG 124 to further generate energy. Also, the primary DEG 122 is then ready for the next droplet of the liquid medium 110 to repeat the energy generation process.

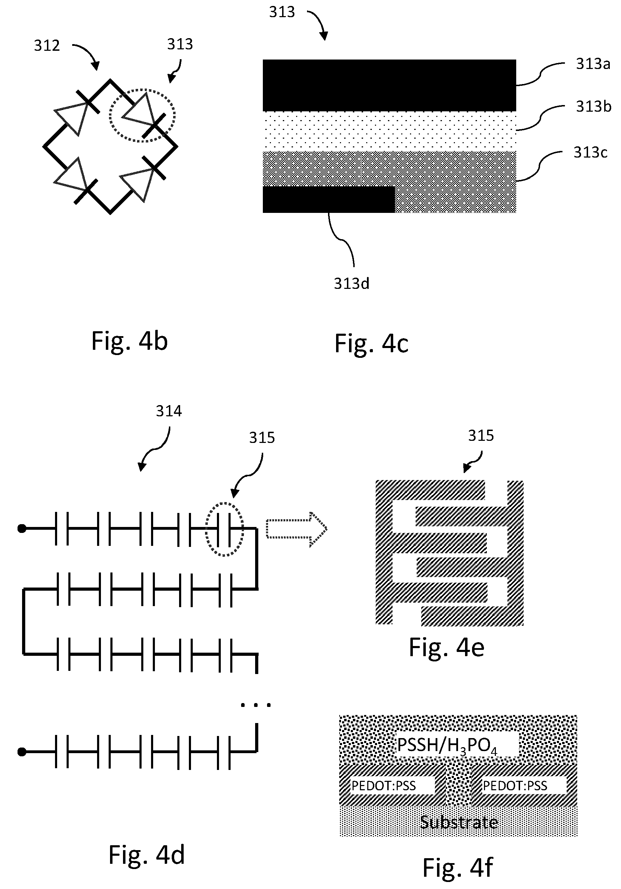

Now with reference to Figs. 4a-f, the produced electricity can be transmitted or stored via a power management module 310, hereinafter referred to as the PMM 310. The PMM 310 comprises energy storage units. Furthermore, the PMM 310 comprises a plurality of rectifiers 312. These are required in the PMM 310 if the output of the DEGs 122, 124, 126 is not in DC electricity. In the shown embodiment, the PMM 310 comprises a 3-layer stacking of (from top to bottom) comprising of the primary DEG 122, full-wave rectifiers 312 and large-scale (> 30 cells) micro supercapacitor arrays 314. Preferably all the components are completely made of non-metal materials to prevent the marine corrosion. For example, the triboelectric surface 122a is made of PTFE and the first and second electrodes 122b, 122c, are made of graphene. A diode 313 of the rectifier 312 is made of Si and NbSi2 microparticles that may work at high frequency > 1 GHz. The diode 313 comprises of Graphene 313a, NbSi2 Particles 313b, Si Particles 313c, and graphene 313d. PEDOT:PSS (electrodes) and polystyrene sulfonic acid [PSSH]/phosphoric acid [$H_3PO_4$] (electrolytes) are preferably used for the micro supercapacitors 314, and PEDOT:PSS/graphene composites for all the interconnect and local electrodes 316. Each layer can be printed with direct ink writing or inkjet printing to realize low-cost and scalable manufacturing. The 3D stacking structure minimizes the use of in-plane interconnect to shorten the transport lengths, so that conductive carbon or conducting polymers can be used as interconnect to replace metal in spite of their relative lower electrical conductivity. In general, multiple (about 5-100) DEGs 122, 124, 126 may share 1 rectifier 312 and 1 micro supercapacitor array 314 (consisting of about 100 cells connected in series). About > 60% electricity from the DEGs can be stored in the micro supercapacitor arrays 314 (as shown in Figure 4 in the Appended draft entitled "Ultrahigh-rate metal-free on-paper micro-supercapacitor arrays enabling direct storage of instantaneous high-voltage electricity from mechanical energy harvesters") to form stable DC power that can be further managed through the existing power management for solar panels. Fig. 4e shows a schematic illustration of a top view of a micro supercapacitor 315. Fig. 4f shows a schematic illustration of a cross sectional view of the micro supercapacitor 315.

Now again with reference to Fig. 2. The WEC 100 comprises a liquid pump 140. The liquid pump 140 is arranged have the capacity to pump the liquid medium 110 from the bottom tank 129 to the top tank 128. The liquid pump 140 can be any type of water pump as long as it can pump up the liquid medium 110 from a base level to a high level. In the shown embodiment, the liquid pump 140 is driven by energy extracted from the ocean waves 300. More specifically, the liquid pump 140 is driven by a cyclic upward and downward displacement of a float 150 on the ocean surface. It is conceivable that the WEC 100 may comprise multiple liquid pumps at multiple levels. In the shown embodiment, the WEC 100 comprises a float 150. The float 150 is designed to move vertically with the ocean waves 300 relative to the liquid pump 140. The float 150 is connected to the liquid pump 140 so that its vertical motion drives the liquid pump 140 to pump liquid medium 110 upwards. This setup ensures efficient pumping action driven by ocean wave motion. The WEC 100 further comprises a restrictive part 152 for restricting the float 150 to only be movable along the vertical direction. In the shown embodiment, the restrictive part 152 is a cage. Alternatively, the restrictive part 152 may be in the form of one or more guide rails or a tethering system. The float 150 may be any type of object with an effective mass density less than seawater, usually a hollow plastic ball with large enough diameter to provide large enough force to drive the liquid pump 140. The restrictive part 152, in this embodiment a cage, has suitable dimensions to restrict the float 150 from moving in the horizontal direction while allowing it to move freely in the vertical direction. Preferably, the cage may be arranged so to minimize its surface area towards incoming ocean waves 300 so to minimize its impact to the ocean waves 300 inside the cage. The liquid pump 140 is connected to the float 150 via a pump handle 142, and a pump rod 144. The WEC 100 comprises a pipe arrangement 160. The pipe arrangement 160 fluidly connects the liquid pump 140, the top tank 128 and the bottom tank 129 to form a closed system for the liquid medium 110. In the shown embodiment, the pipe arrangement 160 comprises an inlet pipe 161, a first outlet pipe 162, and a second outlet pipe 163. The inlet pipe 161 fluidly connects the bottom tank 129 and the liquid pump 140. The first and second outlet pipes 162, 163 fluidly connects the liquid pump 140 and the top tank 128. The liquid pump 140 is arranged to pump liquid from the bottom tank 129, via the inlet pipe 161 and the first or second outlet pipes 162, 163, to the top tank 128. The inlet pipe 161 is positioned substantially within the housing 127. This may be advantageous for shielding the liquid medium 110 from cold temperatures outside the housing 127. The first and second outlet pipes 162, 163 are positioned outside the housing 127. In an alternate embodiment, the first and second outlet pipes 162, 163 and liquid pump 140 may alternatively be positioned inside the housing 127. In an alternate embodiment, shown in Fig. 5, the entire pipe arrangement 160 is located outside housing 127. It yet a further embodiment, it is conceivable that the entire pipe arrangement 160 and the liquid pump 140 may be located within the housing 127. The inlet pipe 161, the first and second outlet pipes 162, 163 may be any type of pipes for liquid transport. It is conceivable that the pipe arrangement 160 comprises additional pipes. When multiple, especially large-scale arrays of, WECs are built in horizontal deployment, additional pipes can be used to connect the top tanks 128 and bottom tanks 129, respectively, between neighbouring WECs to maximize the buffering functions of the tanks from the collective perspective and enhance the stability of electricity production of all the WECs. When multiple WECs are vertical ly stacked to save the footprint area, the bottom tank 129 of an upper-tier WEC may be connected to the top tank 128 of a lower-tier WEC to enable the liquid pump 140 in the upper-tier WEC to pump up liquid medium 110 to a height more than 10 meters which a common limitation due to atmospheric pressure.

In Fig. 2, the WEC 100 is shown attached to a fixture 400. Or more specifically, the liquid pump 140 is fixedly coupled to the fixture 400. The term fixture 400 may refer to either an object (e.g., a tower) fixed to the shore or seabed, or a mobile object significantly larger than the WEC (e.g., a ship or a large buoy). The WEC is attached to the fixture 400 by fixture elements 410, 412, 414. The first fixture element 410 fixedly couples the liquid pump to the fixture 400. In an alternate embodiment, the first fixture element 410 may fixedly couple other features of the WEC 100 to the fixture 400, for example the housing 127. The second fixture element 412 restricts the pump rod 144 to only move relative the fixture 400 in a vertical direction. The third fixture 414 fixedly couples the restrictive part 152 with the fixture 400. In Fig. 6, a further embodiment of the WEC 100 is shown wherein the WEC 100 is attached to a buoy 500. Or more specifically, the liquid pump 140 is fixedly coupled to the buoy 500. The buoy 500 is fixedly coupled with the liquid pump 140 via a fourth fixing element 510. It is conceivable that the buoy 500 is fixedly coupled to other parts of the WEC 100, for example the housing 127. The restrictive part 152 is fixedly couple with the buoy 500 via a fifth fixture element 512. Preferably the length L of the pump handle 142 is close to an odd multiple of half wavelength of the ocean waves $\lambda$ as $L = 0.5(2n+1) \lambda$, with n being an integer. Preferably one or multiple of: the one more pipes in the pipe assembly 160, the liquid pump 140 including the pump handle 142, the float 150, the restrictive part 152, the walls for housing 127, the substrates for DEGs 122, 124, 126 and the PMM 310, the fixture elements 410, 412, 414, 510, 512, and the buoy 500 are all made of lightweight plastic materials with high mechanic strength and good resistance to the marine corrosion, such as glass reinforced plastic, polyurea, polyurethane, and polystyrene. Features to assemble the features above and enable sustainable electricity production should belong to this invention. The present disclosure may contain multiple numbers of any of the disclosed feature, for example the float 150, the liquid pump 140, the DEG arrangement 120, the PMMs 310, and the pipe arrangement 160 and any type and volume of the liquid medium 110. The DEG arrangement 120 may be placed either above or below the ocean surface.

Now with reference to Fig. 2. During operation of the WEC 100, the float 150 is floating on the ocean surface, moving up and down with the ocean waves 300. The motion of the float 150 drives the liquid pump 140 to pump liquid medium 110 from the bottom tank 129 to the top tank 128. The liquid medium 110 at the top tank 128 is turned to droplets by the primary droplet generators 121. The droplets of the liquid medium 110 impinge the triboelectric surfaces 122a of the primary DGEs 122 to generate output power. Thereafter, the droplets of the liquid medium fall down to the secondary droplet generators 123. The liquid medium 110 is turned to droplets at a preferable size and falls down at the secondary DEG 124 to generate output power. Thereafter, the droplets of the liquid medium fall down to the tertiary droplet generators 125. The liquid medium 110 is turned to droplets at a preferable size and falls down at the tertiary DEG 126 to generate power. Thereafter, the liquid medium 110 drops down to the bottom tank 129. The liquid medium 110 at the bottom tank 129 is continuously pumped up to the top tank 128 by the liquid pump 140 for new energy generating cycles to realize sustainable long-term electricity generation.

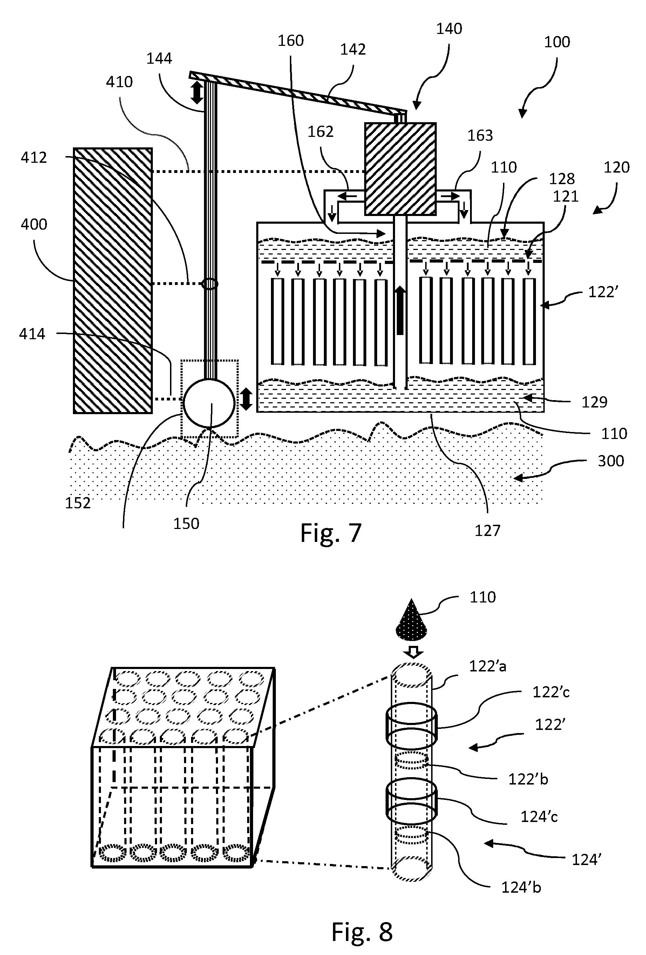

Now with reference to Fig. 7 and 8, an alternative embodiment of the WEC 100 is shown comprising a primary DEG 122'. The primary DEG 122' comprises a tubular triboelectric surface 122'a. The tubular primary DEG 122'a is equipped with a first electrode 122'b and a second electrode 122'c. The first electrode 122'b is positioned at an inner tube surface of the tubular triboelectric surface 122'a. The second electrode 122'c is positioned at an outer tube surface of the tubular triboelectric surface 122'a. When a droplet of the liquid medium 110 drops into the tubular triboelectric surface 122'a, it slides on the inner tube surface within the second electrode 122'c region to collect the triboelectricity and then touches the first electrode 122'b to release the charge, so as to complete the electricity generation. In this embodiment, the process of the droplets of liquid medium 110 engaging with the triboelectric surface to generate power refers to a sliding process. That is, a droplet of the liquid medium 110 slides through the tubular triboelectric surface 122'a for enabling the primary DEG 122' to generate output power. It is possible to build multiple DEGs along the same tubular surface 122'a to realize multiple tiers of DEGs and increase the areal power density. In this embodiment, a secondary DEG 124' is positioned below the primary DEG 122'. The secondary DEG 124' comprises a first electrode 124'b and a second electrode 124'c. The primary DEG 122' and the secondary DEG 124' are both mounted on the tubular triboelectric surface 122'a. It is conceivable that additional DEGs are mounted on the tubular triboelectric surface 122'a. In this embodiment, a plurality of primary DEGs 122' are included in the DEG arrangement 120.

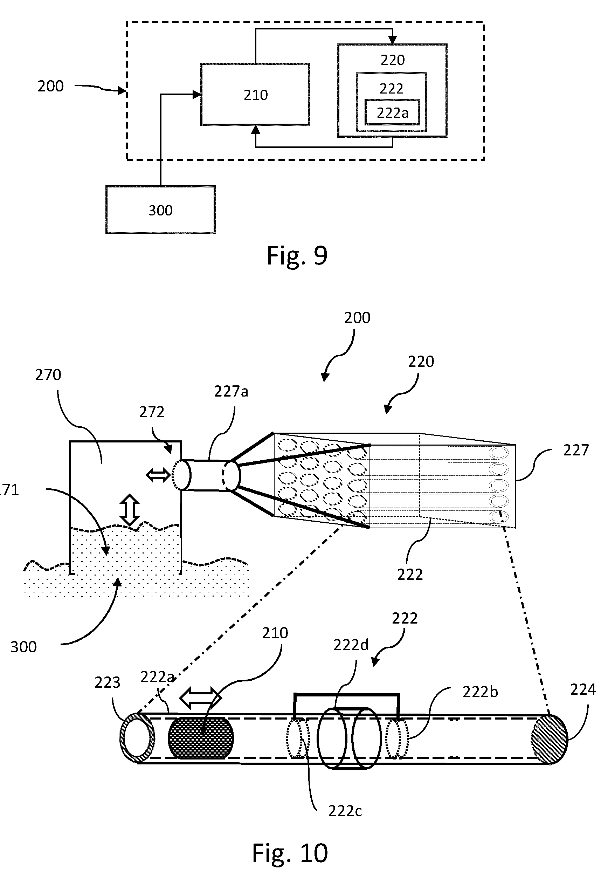

Fig. 9 shows an embodiment of a WEC 200 comprising a liquid medium 210 and a DEG arrangement 220. The DEG arrangement 220 comprises a primary DEG 222. The primary DEG 222 comprises a triboelectric surface 222a. The triboelectric surface 222a is a triboelectric film (e.g., PTFE film). An electrical charge is generated in the primary DEG 222 when a droplet of the liquid medium 210 engage with the triboelectric surface 222a to generate power. The liquid medium 210 comprises water or any conductive liquid. The WEC 200 is arranged so that the liquid medium 210 is contained within a closed system. That is, the liquid medium 210 is contained within a system that do not allow other liquid to enter or leave. Energy may still be exchanged. The WEC 200 further comprises means for using ocean waves 300 to enable droplets of the liquid medium 210 to engage with the triboelectric surface 222a of the primary DEG 222 to generate power. The means for using ocean waves 300 to enable droplets of the liquid medium 210 to engage with the triboelectric surface 222a of the primary DEG 222 may for example comprise an oscillating water column (OWC) chamber with an alternating pressure, whose pressure alteration is caused by ocean waves. The altering pressure in the OWC chamber thereafter enables droplets of the liquid medium to slide over the triboelectric surface 222a to generate power. In the shown embodiment, energy from the ocean waves 300 powers the movement of the liquid medium 210 so that droplets of the liquid medium 210 engage with the triboelectric surface 222a of the primary DEG 222 to generate power. Thereby, the WEC 200 extract power from ocean waves by generating droplets of the liquid medium 210 to slide over the triboelectric surface 222a so that energy is generated in the primary DEG 222.

Now with reference to Fig. 10, a further embodiment of the WEC 200 is shown. The WEC 200 comprises a DEG arrangement 220 comprising a plurality of a primary DEG 222. It is conceivable that the DEG arrangement 220 comprising only a single primary DEG 222. Each primary DEG 222 comprises a tubular triboelectric surface 222a, a first first electrode 222b, a second first electrode 222c, and a second electrode 222d. The first first electrode 222b and the second first electrode 222c are connected by a conductor or an electrical connector. The tubular triboelectric surface 222a has a longitudinal extension from a first end 223 to a second end 224, wherein the second end 224 is opposite the first end 223. The first end 223 may have an opening. The second end 224 may be closed. The longitudinal extension of the tubular triboelectric surface 222a may be horizontal, which is preferable. However, in alternate embodiments the longitudinal extension of the tubular triboelectric surface 222a may be angled. Furthermore, in an alternate embodiment the second end 224 may be open. In this embodiment the longitudinal extension is preferable horizontal so to prevent the droplet of the liquid medium 210 from falling out of the tubular triboelectric surface 222a. Alternatively, the longitudinal extension of the tubular triboelectric surface 222a may be angled so that the second end 224 is higher than the first end 223, so to prevent the droplet of the liquid medium 210 from falling out at the second end 224. In this embodiment, a droplet of a liquid medium 210 is positioned inside the tubular triboelectric surface 222a. When the droplet of the liquid medium 210 slides through the tubular triboelectric surface 222a in a first direction from the first end 223 towards the second end 224 of the tubular triboelectric surface 222a, and passes the primary DEG 222, it slides on the inner tube surface within the second electrode 222d region to collect the triboelectricity and then touches the first first electrode 222b, naturally forming a bridge between the first first electrode 222b and the second electrode 222d to release the charge. The droplet bridge creates a closed-loop electric circuit, allowing charges accumulated in the triboelectric surface 222a to be released, generating an electric current. The electric current may be collected using a PMMs as disclosed in this disclosure. Furthermore, the droplet of the liquid medium 210 may slide in a second direction, which is opposite the first direction, within the second electrode 222d region to collect the triboelectricity and then touches the second first electrode 222c, naturally forming a bridge between the second first electrode 222c and the second electrode 222d to release the charge. The droplet bridge creates a closed-loop electric circuit, allowing charges accumulated in the triboelectric surface 222a to be released, generating an electric current. The electric current may be collected using a PMMs as disclosed in this disclosure. In an alternative embodiment, the primary DEG 222 may provide only one of the first first electrode 222b and the second first electrode 222c, however, in this embodiment, energy would only be generated when the droplet of the liquid medium 210 slides in the first or the second direction.

The WEC 200 further comprises a housing 227 housing the plurality of the primary DEG 222. The housing 227 comprises an opening 227a. The WEC 200 further comprises an oscillating water column (OWC) chamber 270. The OWC chamber 270 comprises a first opening 271 and a second opening 272. The first opening 271 is arranged to be submerged under the ocean surface. Thus, when ocean waves 300 enters the OWC chamber 270 there is an oscillating water column inside it. As illustrated in Fig. 10, when the ocean wave 300 rises, air sealed in the OWC chamber 270 is pushed out and gets into the housing 227 and thus each of the tubular triboelectric surfaces 222a. The pre-deployed water droplets 210 in the tubular triboelectric surfaces 222a are pushed to move rightward. They generate electricity when passing the second electrode 222d and the first first electrode 222b from left to right. When the ocean wave 300 falls, the air in the tubular triboelectric surface 222a arrays is pulled back to the OWC chamber 270. Meanwhile, due to the reduced air pressure, the water droplets in the tubular triboelectric surface 222a are pulled to move leftward. They again generate electricity once passing the second electrodes 222d and the second first electrode 222c from right to left. In this way, the shown embodiment may produce electricity continuously. It is conceivable that additional DEGS may be arranged along the longitudinal extension of the tubular triboelectric surface 222a.

According to a further embodiment, with reference to Figs. 2, 3 and 4a-f, our ocean wave converters comprise

A. Working liquid 110 (water or other suitable liquid medium) with optimized salt concentration to maximize the DEG performance,

B. Floats 150, each restricted in a cage 152 and only able to move up and down,

C. Pumps 140,

D. DEG boxes 120 containing multiple tiers of droplet generators 121 and DEGs 122 and two liquid tanks respectively at the top and bottom, named top tanks 128 and bottom tanks 129.

E. power management modules (PMMs) 310 that may include rectifiers 312, micro-supercapacitor (MSC) 314 arrays and vertical interconnect vias 316, and

F. pipes 160 to connect the pump 140 and the DEG container 120 to form closed systems for the working water 110.

During operation, the floats 150 are floating on ocean surface, move up and down as together with the ocean wave 300, drive the pumps 140 to pump working liquid 110 from the bottom tanks 129 to the top tanks 128 of the boxes. The working liquid 110 at the top tanks 128 is turned to droplets by the droplet generators 121, powers the DGEs 122 at all the tiers, and drop down to the bottom tanks 129. Then, the working liquid 110 at the bottom tanks 129 was pumped up by the pumps 140 for a new cycle to realize sustainable long-term electricity generation.

All the WEC structures to assemble the key components above and enable sustainable electricity production should belong to this invention. The WECs can contain multiple numbers of any of the components (including float 150, pump 140, DEG boxes 120, PMMs 310, and closed liquid systems) and any type and volume of working liquid 110. The DEG boxes 120 can be placed either above or below the ocean surface. Each DEG box 120 can comprise multiple tiers of DEGs 122, 124, 126 and each tier can contain multiple number of DEGs 122, 124, 126. In Fig. 2 and Fig. 6 are two examples: in the first one the WEG 100 is attached to a fixture 400, while in the second one the WEC 100 is in the form of buoy.

In Fig. 2, the WEC 100 is shown attached to a fixture 400. Note fixture 400 may refer to either an object (e.g., a tower) fixed to the shore or seabed, or a mobile object significantly larger than the WEC (e.g., a ship or a large buoy).

In Fig. 6, the WEC 100 is shown as a buoy. The length of pump handle 142 is close to an odd multiple of half wavelength of the ocean waves (L = 0.5 n $\lambda$).

The working liquid 110 can be any type of liquid (most often tap water) that is effective for electricity production from DEGs.

The floats 150 can be any type of objects with effective mass density less than water, usually a hollow plastic ball with large enough diameter to provide large enough force to drive the pumps. The cages 152 have suitable dimensions to restrict the floats 150 from moving in the horizontal direction but allow them to move freely in the vertical direction. Their surface is also of large enough pores to minimize the impact of the movement of ocean waves inside the cage.

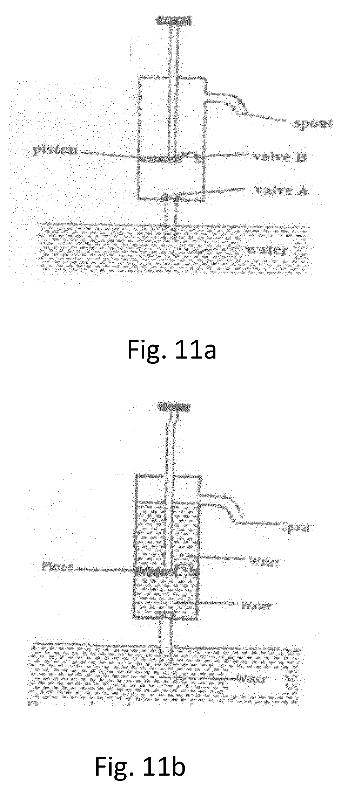

The pumps 140 can be any type of water pump as long as it can pump up the working liquid from a base level to a high level driven by the cyclic upward and downward displacement of the float on the ocean surface. One example is shown in Figs. 11a-b (copied from internet https://www.tutorke.com/lesson/4132--a-figure-14-shows-a-lift-pump-explain-why-when-the-piston-is--i-pulled-upwards-valve-a-opens.aspx).

Fig. 11a shows a lift pump:

(i) Pulled upwards, valve A opens while valve B closes;

(ii) Pushed downwards, valve A closes while valve B opens.

After several strokes, water rises above the piston as shown in Fig. 11b.

The DEG boxes 120 contain multiple tiers of droplet generators 121, 123, 125 and DEGs 122, 124, 126 and two liquid tanks respectively at the top and bottom, named top tanks 128 and bottom tanks 129.

The droplet generators 121, 123, 125 can be any type of droplet generators that produce liquid droplet of volume between 1 $\mu$L and 1 mL. For example, they can be small channels at the bottom of a liquid tank and the channels ends with small nozzles. The nozzle diameter is tailored in terms of the surface tension of the working liquid 110 and its pressure (height) in the corresponding tank, so as to enable continuous jetting of liquid drops, not liquid lines.

The DEGs 122, 124, 126 can be any type of triboelectric film (e.g., PTEF film) equipped with top and bottom electrodes 122b, 122c. Preferably, the electrodes 122b, 122c are made of non-metal materials, such as conductive carbon (graphite, graphene, carbon blacks, carbon nanotubes, etc.), conducting polymer (PEDOT:PSS, polyaniline, etc.), and conductive metal compounds to avoid corrosion at the marine environment. The produced electricity can be transmitted or stored via any type of power management module 310 that contains at least energy storage units. In most cases, rectifiers 312 are also needed in 310 unless the output of the DEGs is DC electricity. Preferred is a power management system 310 of 3-layer stacking of (from top to bottom) DEGs 122, full-wave rectifiers 312 and large-scale (> 30 cells) microsupercapacitor arrays 314. Even more preferred are that all the components are completely made of non-metal materials to prevent the marine corrosion, for example, PTFE and graphene for DEGs 122, Si and NbSi2 microparticles for diodes 313 in the rectifiers 312 that may work at high frequency > 1 GHz, PEDOT:PSS (electrodes) and PSSH/$H_3PO_4$ (electrolytes) for

the microsupercapacitors 314, and PEDOT:PSS/graphene composites for all the interconnect and local electrodes 316. Each layer can be printed with direct ink writing or inkjet printing to realize low-cost and scalable manufacturing. The 3D stacking structure minimizes the use of in-plane interconnect to shorten the transport lengths, so that conductive carbon or conducting polymers can be used as interconnect to replace metal in spite of their relative lower electrical conductivity. In general, multiple (about 100) DEGs 122 share 1 rectifier 312 and 1 microsupercapacitor array 314(, consisting of about 100 cells connected in series). About > 60% electricity from DEGs can be stored in the MSC arrays (as shown in Figure 4 in the Appended draft entitled "Ultrahigh-rate metal-free on-paper micro-supercapacitor arrays enabling direct storage of instantaneous high-voltage electricity from mechanical energy harvesters") to form stable DC power that can be further managed through the existing power management for solar panels. The pipes 160 can be any type of pipes for liquid transport to connect the pumps 140 and the DEG boxes 120 to form closed systems for the working liquid 110. Preferably the pipes 160, the pumps 140 including the handles 142, the float 150 including cage 152, the walls 127 for DEG boxes 120, the substrates for DEGs 122 and PMM 310, and the fixing sticks 412, 414, 512 and buoys 500 in Fig. 2 and Fig. 6 are all made of lightweight plastic materials with high mechanic strength and good resistance to the marine corrosion, such as glass reinforced plastic, polyurea, polyurethane, and polystyrene.

In the drawings and specification, there have been disclosed preferred embodiments and examples of the disclosure and, although specific terms are employed, they are used in a generic and descriptive sense only and not for the purpose of limitation, the scope of the invention being set forth in the following claims. The present disclosure has mainly been described above with reference to a few embodiments. However, as is readily appreciated by a person skilled in the art, other embodiments than the ones disclosed above are equally possible within the scope of the present disclosure, as defined by the appended claims. Although features and elements are described above in particular combinations, each feature or element can be used alone without the other features and elements or in various combinations with or without other features and elements. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain features are recited in mutually different dependent claims does not indicate that a combination of these features cannot be used to advantage. Any reference signs in the claims should not be construed as limiting the scope. Harvesting renewable and clean mechanical energy at ambient environment to form self-charging power systems to supply emerging electronics has been envisioned as a promising and sustainable way to mitigate the energy crisis and environmental concern of battery waste. Many recent mechanical energy harvesters have been able to produce instantaneous (pulsed) electricity with high peak voltage over 100 V. However, directly storing such irregular and high-voltage electricity remains a great challenge. The present energy storage devices (such as batteries) can store low-voltage (< 10 V) pulse electricity with efficiency > 50% but the efficiency reduces drastically to < 2% in the case of high voltage > 100 V. To increase the storage efficiency for high-voltage electricity, additional components (such as converters or inductors) become indispensable yet significantly increase the system complexity and form factor. Here, simply through proper doing of the well-known conducting polymer PEDOT:PS S, a type of high-rate metal-free on-paper large-scale micro-supercapacitor (MSC) arrays have been developed for direct high-efficiency storage of high-voltage instantaneous electricity. Within a small area of 2.4 cm $\times$ 3.4 cm on various commercial paper substrates, a large-scale MSC array (consisting of 100 cells) can be fully printed to deliver an ultrawide working voltage window of 160 V at an ultrahigh scan rate up to 30 V s$^{-1}$. The ultrahigh rate capability enables the MSC arrays to quickly capture and efficiently store the high-voltage (~ 150 V) instantaneous electricity (produced by a droplet based electricity generator) at a high efficiency of 62%, significantly higher than that of the normal batteries or capacitors demonstrated in the literature. Moreover, the compact and all-carbon features make the MSC arrays promising candidates for sustainable high-performance energy storage in self-charging power systems.

## 1. Introduction

The global concern in energy crisis, climate change and environmental pollution has stimulated enormous research efforts in harvesting clean and renewable energies from mechanical motions in the environment, including wind, ocean waves, water droplets, and human motions.[1] The recent mechanical energy harvesters have enabled the production of electricity with instantaneous high power density up to 10 MW m$^{-2}$ and output peak voltage at kV level[1] through various mechanisms, such as droplet-based electricity generators[2] and triboelectric nanogenerators[1,3,4]. Because the mechanical energy in environment is usually irregular, the output electricity of the energy harvesters is not available all the time and typically of pulsed waveform with random amplitude and frequency[5]. It is thereby necessary and important to store the irregular electricity into energy storage components, such as batteries and supercapacitors, to form stable and sustainable power sources for electronics[5,6]. However, the present energy storage devices only work at low voltage (< 10 V) and low charging rate (< 100 mV s$^{-1}$)[6]. Their storage efficiency reduces drastically[7-9] to < 2% when directly storing the electricity harvested from mechanical energy source that can reach a high voltage (> 100 V) yet is merely instantaneous (at time scale of millisecond)[2]. At present, additional electronic components (e.g., buck converters[5,10], inductors[7], capacitors[11], and transformers[8,12]) are needed in the power management modules to step down the voltage or buffer the electricity. Not only do they increase the complexity and form factor of the energy harvesting systems, but also they induce considerable extra loss during energy conversion. Highly desired are innovative energy storage components that possess high energy density, wide working voltage window (WVW) > 100 V and high-rate capability to directly store the instantaneous (pulsed) high-voltage electricity with high efficiency.

Recently, there is great research interest in developing large-scale micro-supercapacitor (MSC) arrays[13-17]. The series connection of hundreds of MSCs can simultaneously widen the WVW[16] over 100 V and increase the rate capability[13] over 1 V s[-1]. These merits provide an ideal solution to directly storing the instantaneous high-voltage electricity from mechanical energy harvesters. However, the series connection of a large number of MSCs significantly reduces the overall capacitance and hence restricts their energy storage capability. It is thereby necessary for the individual MSCs to possess large areal capacitance to retain sufficiently high capacitance of the arrays without increasing the footprint area. However, it is in general challenging to fabricate supercapacitors simultaneously possessing high-rate capability and large areal capacitance[18-21]. Large areal capacitance often relies on thick electrodes, but thick electrodes usually comprise lengthy and torturous ion transport paths that degrade the electrochemical performance at high rates. The general way to eliminate the dilemma is to develop highly conductive thick electrodes with open[21], directional[19], and/or macroscopic[20] pores, such as vertically aligned MXene flakes[19], macro-porous MXene film[20] and 3D carbon nanotube/graphene structure[18,21,22]. The filling of electrolytes (in either liquid state or gel state) into these pore structures forms fast paths for ion transport and high-rate charge transfer at the electrode-electrolyte interfaces to attain high-rate performance. In particular, with the directional pore structures penetrating from the top to the bottom of the electrodes,[19,21] high-rate performance can retain even when the electrode thickness exceeds 100 $\mu$m[19]. However, in practice, such pore structures require complicated fabrication processes, making it challenging to fabricate the large-scale MSC arrays.

Another way to prevent the series connection-induced capacitance reduction is to widen the WVW of individual MSCs so that much less MSCs are needed in series connection in order to attain the same overall WVW of the arrays. In this sense, the emerging highly conductive pseudocapacitive electrode materials MXene may not be favored due to their narrow WVW of only 0.6 V in acid electrolytes. Also, although asymmetric MSCs may offer a wide WVW over 1.6 V by combining different types of electrode materials[23], they suffer from complicated fabrication processing and poor scalability. Ionic liquid-based electrolytes can widen the WVW to 3.0-4.0 V, but are usually restricted to low-rate capability (< 100 mV s[-1])[24].

In this work, we have developed a scalable full-printing technique to fabricate metal-free on-paper MSCs simultaneously possessing wide WVW, large areal capacitance and high-rate capability. The key is the formulation of highly-conductive organic inks based on properly-doped poly(3,4-ethylenedioxythiophene):poly(styrene sulfonate) (PEDOT:PSS) to enable scalable 3D printing (direct ink writing) of MSCs on paper substrates with excellent electrochemical performance. Exceptionally, the printed symmetric MSCs simultaneously exhibit a wide WVW of 1.6 V and a high areal capacitance over 60 mF cm[-2] at a high scan rate of 1 V s[-1]. Remarkably, highly dense MSC arrays consisting of 100 cells connected in series have been fully printed on paper substrates to deliver a large overall capacitance of 3 $\mu$F at an ultrahigh scan rate of 30 V s[-1] and an ultrawide WVW of 160 V. The full-printed MSC arrays can directly store the high-voltage (> 150 V) instantaneous electricity produced by droplet-based electricity generators (DEGs)[2] at a high energy storage efficiency of 62%, suggesting a promising solution to the energy storage for mechanic energy harvesting systems. Moreover, the totally eco-friendly (metal-free, all-carbon) on-paper MSC arrays greatly increase the chance to develop fully sustainable self-charging power systems for emerging electronics.

## 2. Results **and** Discussion

Based on PEDOT:PSS, we have developed a more facile method to fabricate thickness-independent high-rate MSCs. In no need of any process to produce special pore structures, the direct ink writing (DIW) of properly doped PEDOT:PSS electrodes has enabled the MSCs to attain high-rate capability > 1 V s[-1] for electrode thickness > 100 $\mu$m. PEDOT:PSS is a well-known conductive polymer incorporating electronically conducting conjugated PEDOT with positive charges and electronically insulating (yet ionically conductive) PSS with negative charges. The insulating PSS greatly increases the dispersibility of PEDOT:PSS in water[25] and hence allows its promising applications in photovoltaics[26], flexible electronics[27,28], and energy storage devices[29]. In addition, appropriate dopants, such as ethylene glycol (EG) and dimethyl sulfoxide (DMSO), can significantly increase conductivity of PEDOT: PSS by 2-3 orders of magnitude[25]. Although the mechanism has not been fully understood yet, many studies support that the conductivity increase is due to the favorable doping-induced phase separation to generate grown PEDOT-rich grains which form interconnected highly-electronically-conductive networks[26,30]. While at present the doping of PEDOT:PSS is mainly for conductivity increase[25], we have found that it also plays an important role in the electrochemical behaviors of PEDOT:PSS-based supercapacitors. In addition to the electronically conductive PEDOT-rich networks, the doping-induced phase separation may simultaneously generate ionically conductive (electronically insulating) PSS-rich networks.[30] The two types of networks entangle with each other to form fast transport paths for both electrons (holes) and ions to attain high-rate capability even in very thick electrodes, as illustrated in Fig. 1a and to be demonstrated below. More importantly, likely for the first time, our research has validated that sufficient doping can also significantly widen the WVW of PEDOT:PSS-based MSCs from the usual 0.8-1.0 V to 1.6 V.

**Fig. 1| Effects of EG doping on the electrochemical performance of PEDOT: PSS-based MSCs. a**, Schematic of doping-induced phase separation between PEDOT- and PSS-rich regions. **b**, Schematic of the 2D two-phase model for half-cell MSCs. **c**, CV curves of the MSCs with PEDOT:PSS doped by EG of various $\phi_{EG}$. **d**, Simulated CV curves of the half-cell MSCs with different $w_{PEDOT}$. **e**, Simulated hole concentration distribution in the PEDOT region ($w_{PEDOT} = 10$ nm, $V = 0.2$ V). **f**, Simulated hole concentration profile at the position of $x = -25$ nm in (**e**). **g**, Dependence of $w_{sat}$ on $V$ for different $w_{PEDOT}$. **h**, Dependence of potential window and critical saturation width $w_{sat,c}$ on $w_{PEDOT}$.

To investigate the doping effects on the electrochemical performance of PEDOT:PSS electrodes, we use a mask-based process to fabricate a set of MSCs (see Experimental Section) based on PEDOT: PSS dispersions in mixed water/EG solvents with the volume fraction of EG, $\phi_{EG}$, ranging from 0% to 30% (Fig. 1c and Supplementary Fig. 1). The MSC with pure ($\phi_{EG}$ = 0%) PEDOT:PSS electrodes exhibits a rectangular cyclic voltammetry (CV) curve over the voltage window of 0-0.8 V, consistent with the normal WVW of PEDOT:PSS-based supercapacitors[29]. When the applied voltage is further increased beyond 0.8 V, the CV curve deforms evidently from the rectangular shape to endure a stage down at the high voltage region (Supplementary Fig. 1a). When $\phi_{EG}$ increases from 0 % to 5 %, the WVW (the voltage region of rectangular CV curves) gradually increases from 0.8 to 1.6 V. Further increasing $\phi_{EG}$ up to 30% does not increase the WVW beyond 1.6 V, but it seems to be mainly limited by the electrolyte decomposition, rather than the stage down of the charging current (Supplementary Fig. 1b,c). In order to understand the mechanism for doping-widened WVW, we employ the 2D two-phase model developed by Volkov *et al.*[31] to conduct computer simulations and investigate the dependence of the CV curves on the material morphology in the PEDOT:PSS electrodes. As illustrated in Fig. 1b, the two-phase model represents a nanopore geometry of the PEDOT:PSS electrode which consists of the electronically conductive PEDOT regions (of width $w_{PEDOT}$) and the ionically-conductive PSS-rich regions (of width $w_{PSS}$). The model is detailed in Supplementary Note 1. It has offered insight that the capacitance of PEDOT:PSS originates from the electrical double layers at the interface between the PEDOT- and PSS-rich regions (hereafter denoted as P-P interface) and their CV curves can be understood in terms of the coupled ion-electron diffusion and migration[31]. In this work, we have further found that the CV curves vary evidently with $w_{PEDOT}$. As shown in Fig. 1d, for different $w_{PEDOT}$, all the CV curves in negative potential region remain unaltered, while in the positive potential region they stage down at certain potential, $V_{stage}$. The larger $w_{PEDOT}$, the higher $V_{stage}$. Obviously, $V_{stage}$ determines the WVW of the MSCs. To unveil the mechanism of the stage down, we analyze the distribution of the hole concentration $c_h$ within the PEDOT region (Fig. 1e-h and Supplementary Fig.3). During the charging process, $c_h$ increases with the applied potential V, thus generating the charging current (dominated by the temporal variation of $c_h$). Consistent with previous research[25,31], when Vapproaches $V_{stage}$, $c_h$ at the P-P interface becomes saturated (approaching the maximum concentration[31] of accessible sites for holes $c_h^0$ ). However, the saturation region ( $c_h = c_h^0$ ) has a finite width $w_{sat}$ (Fig. 1f). Further increasing V cannot increase $c_h$, but increase $w_{sat}$ (Fig. 1g). Once $w_{sat}$ reaches a critical width $w_{sat,c}$, it also ceases to increase (Fig. 1g), which significantly reduces the temporal variation of $c_h$ and causes the stage down of charging current. Because $w_{sat,c}$ increase with $w_{PEDOT}$ (Fig. 1g), $V_{stage}$ (and hence WVW) should also increase with $w_{PEDOT}$ (Fig. 1d,h). Since the doping of PEDOT:PSS prompts the growth of PEDOT-rich grains[25,30], it can thereby widen the PEDOT-rich regions and increase the WVW of the MSCs. This explains our experimental results in Fig. 1c.

It is of interest and importance to note that our simulations suggest that the WVW of PEDOT:PSS electrodes is determined by the critical width $w_{sat,c}$ (about 1-3 nm, Fig. 1h) at the P-P interfaces. This further confirms the previous conclusion[31] that the capacitance of PEDOT:PSS electrodes is dominated by the P-P interfaces, rather than the electrode/electrolyte interface as in the general supercapacitors. Since the P-P interfaces can be uniformly distributed inside the PEDOT:PSS electrodes (Fig. 1b), their electrochemical performance is expected to be independent of the electrode thickness. In addition, besides widening the WVW, the EG doping can greatly (by two orders of magnitude) increase the electronic conductivity of PEDOT:PSS only at the expense of slightly (by < 2 times) reduced ionic mobility[30]. One can then expect to use EG-doped PEDOT:PSS to fabricate thickness-independent high-rate MSCs. Indeed, we have used the EG-doped PEDOT:PSS dispersion to fabricate MSCs with significantly reduced equivalent series resistance and improved rate capability (Supplementary Fig. 1d,e).

**Fig. 2| Morphology and Electrochemical characterization of the MSCs with DIW printed PEDOT:PSS electrodes. a**, Top-view SEM image of the MSC electrodes printed on a photo paper, (inset) photograph of the electrodes of an entire MSC (scale bar: 1mm). **b**, CV curves of MSCs with various electrode thickness at the scan rate of 200 mV s$^{-1}$. **c**, CV curves of an MSC with 107-μm-thick electrodes at different scan rate. **d**, Thickness-dependent areal and volumetric capacitance at the scan rate of 1000 mV s$^{-1}$. **e**, Log–log plot of the charging current density (at the voltage of 0.8 V) against scan rate. **f**, Areal capacitance extracted from the CV curves at various scan rates. **g**, GCD curves at the current density of 800 μA cm$^{-2}$. **h**, Areal capacitance calculated from GCD curves at various current densities. **i**, Areal Ragone plot for the state-of-the-art printed MSCs.

In order to fabricate thickness-controllable MSCs and large-scale MSC arrays, it is desired to develop a scalable printing technique for the PEDOT:PSS MSCs. However, the adding of EG into the PEDOT:PSS aqueous dispersion causes polymer aggregation that impairs printability. Following the strategy of a previous work[32], we also use electro-chemically-exfoliated graphene and graphene quantum dots to stabilize the PEDOT:PSS water/EG dispersion without degrading the electrochemical performance. Initially, the EG concentration in the solvents is set as $\phi_{EG}$ = 20% to ensure wide WVW and high-rate capability of the MSCs and meanwhile retain suitable properties (especially viscosity and drying speed) of the final inks for the printing process. We further use vacuum drying to concentrate and viscosity the PEDOT:PSS inks for effective 3D printing (DIW) of thick MSC electrodes. The inks are highly stable (with no occurrence of any polymer aggregation) even when the weight concentration (of all the solid materials) increases up to 3%. The ink viscosity increases with the concentration and exceeds 1000 Pa s at the concentration of 3% (Supplementary Fig. 4). The higher viscosity gives rise to higher resolution of the printed patterns. The 3% ink enables direct printing of fine patterns with lateral resolution about 100 μm and thickness about 5 μm for one printing pass (with 25 printing passes, the pattern thickness is over 130 μm, Supplementary Fig. 5). The electrical conductivity is nearly independent of the thickness, varying within a narrow range between 225 to 322 S cm$^{-1}$ (Supplementary Fig. 6). However, for thick patterns, the lateral resolution decreases due to the need of multiple printing (overwriting) passes. To overcome the shortcoming, we combine the DIW with a femtosecond laser scribing process to fabricate thick MSC electrodes on paper substrates with high lateral resolution in a time- and material-effective manner. As illustrated in Supplementary Fig. 7, after printing the non-gapped MSC electrodes, femtosecond laser is used to scribe gaps in the electrodes to form interdigitated structure (Fig. 2a and Supplementary Fig. 8). Thanks to the high-resolution femtosecond laser scribing process[33], the inter-finger gap in our MSCs is as narrow as 85 $\mu$m even when the electrode thickness is 105 $\mu$m, corresponding to a high aspect ratio of > 1.2. The narrow gaps shorten the transport distance of the electrolyte ions and further contribute to the high-rate capability of the MSCs[34]. Meanwhile, they minimize the waste of active materials and energy because only a small amount of the electrode materials within the gap regions are removed by laser.

The scalable fabrication of small-size (footprint area down to 2-3 mm$^2$) and thick (up to > 100 $\mu$m) MSCs enables us to investigate their thickness-dependent electrochemical performance. At a medium scan rate of 200 mV s$^{-1}$ (Fig. 2b), the MSCs exhibit ideal capacitive behavior as indicated by the nearly perfect rectangular shape of the CV curves over the wide WVW of 1.6 V for all the electrode thickness, ranging from 26 $\mu$m for 5 printing layers to 132 $\mu$m for 25 printing layers. Even at the high scan rate of 1 V s$^{-1}$, the CV curves of all the MSCs still exhibit excellent rectangularity (Figs. 2c and Supplementary Fig. 9c), indicating excellent rate capability[19] in spite of the use of gel electrolytes (PSSH/H$_3$PO$_4$) that have relatively lower ionic conductivity than the liquid-state electrolytes often used in other high-rate supercapacitors[18-20,22]. As the thickness increases, the areal capacitance increases linearly, while the volumetric capacitance merely declines slightly (Fig. 2d). Figure 2e plots the charging current density $i$ (at the voltage of 0.8 V) against the scan rate v, following the power law $i \sim v^b$ with $b$ being the characteristic exponent[19]. At the scan rates between 200 and 2000 mV s$^{-1}$, $b$ is very close to 1 for the MSCs with electrodes no thicker than 55 $\mu$m and still around 0.9 for the thickest (132 $\mu$m) MSC. These suggest that the charge-storage kinetics of all our MSCs are dominated by the high-rate surface/interface interactions, not the slow diffusion-limited bulk interactions[19], and the high-rate performance is almost independent of electrode thickness. Moreover, one should note that our MSC electrodes are based on very dense (non-porous) PEDOT:PSS films (Fig. 2a and Supplementary Fig. 5). Morphologically, there is no significant amount of electrode/electrolyte interfaces to facilitate the high-rate charge storage. Once more, it can be inferred that the doping-induced phase separation in PEDOT:PSS films generates an enormous number of internal P-P interfaces, which leads to the thickness-independent high-rate capability of the MSCs. As confirmed in Fig. 2f, with the scan rate increasing from 200 to 1000 mV s$^{-1}$, the areal capacitance remains constant for the 26-$\mu$m- and 55-$\mu$m-thick MSCs and only declines slightly (-15%) for the 107-$\mu$m-thick MSC. Meanwhile, the galvanostatic charge-discharge (GCD) curves of all the MSCs are symmetrical and triangular at a high current density from 0.8 mA cm$^{-2}$ (Fig. 2g) to 10 mA cm$^{-2}$ (Supplementary Fig. 9a), demonstrating a high coulombic efficiency. The highest areal capacitance obtained from the GCD curves (Fig. 2h) reaches 117 mF cm$^{-2}$ for the 132 $\mu$m MSC at 0.8 mA cm$^{-2}$, and remains 109 mF cm$^{-2}$ even at 10 mA cm$^{-2}$, confirming the excellent rate capability at large electrode thickness. Compared with most of the printed MSCs (Supplementary Table 2), our MSCs possess wider WVW, larger areal capacitance, higher rate capability, and hence much higher energy density and power density. Specifically, the areal energy density of the 132-$\mu$m-thick MSC reaches 28.5 $\mu$Wh cm$^{-2}$ at the power density of 12.8 mW cm$^{-2}$ (at the scan rate of 200 mV s$^{-1}$), or 15.5 $\mu$Wh cm$^{-2}$ at 70 mW cm$^{-2}$ (at the scan rate of 2000 mV s$^{-1}$), significantly surpassing most of the state-of-the-art printed MSCs (Fig. 2i and Supplementary Table 2)[15,29,32,35-45].

**Fig. 3|Fabrication and characterization of a large-scale (100-cell) MSC array. a,** Optical micrographs indicating the scalable fabrication process of individual MSCs: (i) DIW printing of the non-gapped MSC electrode, (ii) laser scribing into interdigitated electrodes, (iii) during and (iv) after the inkjet printing of low-concentration PSSH electrolyte, and (v) after DIW deposition of a drop of high-concentration PSSH electrolyte. **b,** Photographs of the 100-cell MSC array on photopaper, (inset) photograph of one individual MSC cell (scale bar: 1 mm). **c,** CV curves at the scan rate from 10 to 30 V s$^{-1}$. **d,** GCD curves at the current from 20 to 100 µA. **e,** Cell number-dependent overall capacitance and WVW. **f,** Capacitance against WVW for various MSC arrays. **g,** Cycling stability for 4000 CV cycles at 20 V s$^{-1}$, (inset) CV curves after different number of cycles.

The stable high-concentration PEDOT:PSS inks and the scalable printing process enable us to monolithically fabricate large-scale MSCs array comprising up to 100 series-connected cells within a small footprint area (2.4×3.4 cm$^2$, Fig. 3b). As illustrated in Supplementary Fig. 7, first, the array pattern, including the 100 individual MSC cells (each of area as small as 1.2 × 2.2 mm$^2$, Fig. 3a-i) and the interconnect, was printed on paper with the PEDOT:PSS inks through DIW. Then, after all the MSC electrodes were scribed via the femtosecond laser into interdigitated structures (Fig. 3a-ii and Supplementary Fig. 10a), the PSSH/H$_3$PO$_4$ ink was printed on every MSC cell to form the gel electrolyte. However, the gel electrolytes need to be printed in large thickness (to ensure the high-rate performance of the MSCs) and exactly within the MSC electrode area (to avoid electrolyte short with the neighboring MSCs where the inter-cell distance is only as small as 1 mm). It is challenging for DIW to "efficiently" print such small thick electrolyte patterns[16] due to the inevitable tradeoff between resolution and time efficiency. To address the challenge, we combine DIW with inkjet printing to develop a self-assembly process to realize high-resolution and high-efficiency fabrication of the electrolyte patterns. Considering the surfaces of both the commercial paper substrates and the PEDOT:PSS electrodes are hydrophobic, we first use inkjet printing to precisely print a thin layer of PSSH/H$_3$PO$_4$ electrolyte on the MSC electrodes to modify their surface to be hydrophilic (Fig. 3a-iii,vi). Then, on the center of every MSC, a drop of high-concentration PSSH/H$_3$PO$_4$ electrolyte ink is deposited through DIW and spreads to form self-assembled thick small electrolytes (Fig. 3a-v, 3b (inset) and Supplementary Fig. 10b).

The CV curves of the 100-cell MSC arrays exhibit perfect rectangularity at the ultrahigh scan rate of up to 30 V s$^{-1}$ (Fig. 3c) within a remarkable wide voltage window of 160 V. The capacitance retains about 90% after 4000 CV cycles at 20 V s$^{-1}$ (Fig. 3g), confirming the high-rate capability and good cycle life. It is worthy of mentioning that here the highest scan rate is likely restricted by our characterization equipment, rather than the upper limit of rate capability of the MSC arrays themselves. Their GCD curves also indicate ideal symmetric triangles with negligible IR drop under the currents of up to 100 μA (Fig. 3d). A fine study (Fig. 3e and Supplementary Fig. 11) confirms that with increasing the cell number, the WVW increases in proportion and the overall capacitance decreases in reverse proportion, confirming the excellent scalability of our fabrication process. The capacitance (3 μF) of the 100-cell array is almost one order of magnitude higher than that of the previously reported MSC arrays[16,46,47] with WVW beyond 100 V (Fig. 3f and Supplementary Table 3). The improved capacitance of our large-scale MSC arrays can be ascribed to the simultaneously attained large areal capacitance and wide WVW of the individual MSCs. The former ensures large capacitance of the arrays, while the latter reduces the number of necessary MSCs in the arrays to achieve the same overall WVW (Supplementary Fig. 12) so as to further minimize the capacitance reduction induced by series connection. Moreover, our metal-free on-paper PDG-MSCs array also demonstrates outstanding flexibility, with nearly unaltered CV curves under various bending angles (Supplementary Fig. 13).

**Fig. 4|Energy storage efficiency of the MSC arrays charged by the DEG. a**, Output voltage signals of the DEG after rectification by a bridge rectifier, (inset) close-up view of the output voltage. **b**, Charging (by the DEG) curves of two 6-cell arrays of doped and undoped PEDOT:PSS MSCs, (inset) circuit diagram of the charging test. **c**, Galvanostatic discharging curves of the two arrays charged by DEG in (**b**). **d**, Charging (by the DEG) curves of the MSC arrays with different cell number. **e**, Galvanostatic discharging curves of the three arrays charged by DEG in (**d**). **f**, Galvanostatic discharging curves of three MSC arrays with combined parallel-series modes of 1P × 30S, 2P × 30S and 3P × 30S, which have been charged by the DEG for 150 s in the pure series connection mode of 3S, 60S and 90S, respectively. **g**, Total energy stored in the arrays and average energy stored in individual cells as a function of the cell number after the MSC arrays are charged by the DEG for 150 s. **h**, The measured average voltage and power of the DEG under different external load resistance. Blue dash line indicates the storage power of the 90-cell MSC array. **i**, Comparisons of peak voltage-dependent energy storage efficiency between various energy storage devices. All the devices were charged by pulse electricity produced by mechanic energy harvesters.

We evaluate the efficiency of our MSC arrays for storing electricity produced by a DEG[2] (Supplementary Fig. 14). All the test conditions for the DEG are kept constant. The DEG produces pulse electricity with open-circuit peak voltage of 150 V (Fig. 4a) and short-circuit current around 200 $\mu$A (Supplementary Fig. 14b). To effectively capture such instantaneous electricity, ultrahigh-rate performance of the energy storage devices is highly desired. To verify this point, we have fabricated two types of 6-cell MSC arrays on paper substrate, one based on the high-rate doped PEDOT:PSS electrodes and the other on the pristine (undoped) PEDOT:PSS electrodes (Supplementary Fig. 15). Although both two MSCs arrays exhibit rectangular CV curves and comparable capacitance (~ 75 $\mu$F) at the low scan rate of 0.3 V s$^{-1}$, when the scan rate increases to 6 V s$^{-1}$, only 7% capacitance retains in the undoped PEDOT: PSS MSC array while 88% retains in the doped one (Supplementary Fig. 15b,c). After being charged by the DEG for 1 h, the doped MSC array reached a voltage of 3.0 V while the undoped array could only attain 0.48 V (Fig. 4b). Afterwards, the two MSC arrays were discharged at the same current of 1 μA. It took 294 s for the doped array to fully discharge (from 3.0 V to 0 V), while only 36 s for the undoped array (Fig. 4c). Correspondingly, with the same charging time, the doped array stored an energy of 455 μJ, ~ 50 times more than the undoped array (8.6 μJ), confirming that the high-rate capability of the doped PEDOT:PSS MSCs significantly improves the storage efficiency of the instantaneous electricity.

The energy storage efficiency can be further improved by increasing the cell number of the MSC arrays. After being charged by the DEG for the same period of 150 s, the attained voltage of the MSC arrays (Supplementary Fig. 16) increases with their cell number, from 3.7 V for 10 cells to 12.5 V for 30 cells. The stepwise voltage increase (inset of Fig. 4d) is similar to the energy storage behavior charged by piezoelectric energy harvester[48], confirming the charging of MSC arrays by the instantaneous (pulsed) electricity. When discharging at the same current of 1 μA, the voltage of all the MSC arrays decreases linearly with time (Fig. 4e). Following the principle of "charging in series and discharging in parallel" that is often implemented for the energy storage units in self-charging power systems[49], we use the DEG to charge the MSC arrays of 30, 60 and 90 cells in series connection also for 150 s, but discharge them in the combined parallel-series connection mode of 1P × 30S, 2P × 30S, and 3P × 30S, respectively (here "$mP× nS$" means parallel connections of $m$ groups of $n$ series-connected cells). Before discharging, all the combined MSC arrays attain approximately the same initial voltage (Fig. 4f). At the same constant current of 1 μA, the discharging time of the MSC arrays is nearly proportional to the cell number, suggesting the excellent scalability of our MSC arrays. The discharge behaviors are used to evaluate the energy stored in the MSC arrays (Fig. 4g and Supplementary Table 4). It is clear that after being charged by the DEG for the same time of 150 s, the total energy stored at the MSC arrays increases drastically with the cell number.

Even the average energy stored in one individual cell also increases evidently with the total cell number (Fig. 4g). The phenomena should be mainly ascribed to the significantly increased WVW and charging rate (both proportional to the cell number) in the MSC arrays, so that a MSC cell in a large-scale array can store more energy from the pulse electricity than in a small-scale array. To confirm the high energy storage efficiency (ESE) of the MSC arrays, we measured the average voltage [50] and the average output power of the DEG under various external load resistance ranging from 10 kΩ to 1000 MΩ (Fig. 4h). The average power reaches the maximum value of 8.7 μW at 30 MΩ. The 90-cell array stores in total 807.6 μJ within 150 s, corresponding to an effective storage power of 5.4 μW, 62% of the maximum average output power of the DEG. In other words, when storing pulse electricity with a high peak voltage of 150 V, the effective energy storage efficiency (ESE) of our 90-cell MSC array is as high as 62%. As shown in Fig. 4i, the previous studies[7,8,12,51-55] have demonstrated that when storing pulse electricity, the ESE of the present devices (batteries or capacitors) decays drastically with the peak charging voltage. When the charging peak voltage is > 100 V, the ESE is only 0.04% for capacitors (at -750 V)[7] and 1.2% for Li-ion batteries (at -400 V)[8]. Certainly, it is possible to increase the ESE by employing the additional components (such as inductors[7], capacitors[11], and transformers[8,12]) in the power management circuits, but this inevitably increases the complexity and form factor of the systems. In this sense, the 90-cell MSC arrays are absolutely superior thanks to their simplicity (in no use of any auxiliary components) and compactness (footprint area as small as 2.4×3.4 cm$^2$ and total thickness ~ 300 μm, including the thickness of paper substrate and electrolyte).

Finally, as a demo, we use the DEG-charged MSC arrays to light up LEDs. The LED powered by the 30-cell MSC array is much brighter than that directly powered by the DEG (Supplementary Fig. 17). After being charged by the DEG for the same time of 150 s, the 10-cell MSC array can continuously light up the LED for 1.8 s while the 30-cell array for 6.0 s (Supplementary Video), further confirming the increase of ESE with the cell number.

## 3. Conclusions

In conclusion, based on doped PEDOT:PSS, we have developed a simple and scalable process to monolithically print ultrahigh-rate large-scale metal-free MSC arrays on paper substrates to directly store the high-voltage (> 100 V) instantaneous (pulse) electricity produced by recent mechanical energy harvesters. The individual MSCs exhibit nearly thickness-independent electrochemical performance and simultaneously possess a wide working voltage window of 1.6 V, a large areal capacitance up to >60 mF cm$^{-2}$, and at a high rate capability of 1 V s$^{-1}$.

Computer simulations have suggested that the wider working voltage window should be ascribed to the doping-induced widening of the PEDOT-rich regions (grains) that possess wider hole saturation region at the interfaces between PDEOT- and PSS-rich regions. The large-scale MSC arrays consisting of up to 100 cells can be fully printed on paper substrates with a small footprint area of 2.4×3.4 cm$^2$. Thanks to their striking performance of large capacitance > 3 μF, ultrawide working voltage window up to 160 V and ultrahigh rate capability over 30 V s$^{-1}$, the MSC arrays can directly store instantaneous high-voltage (>150 V) electricity with a high energy storage efficiency 72 %, over one order of magnitude higher than the efficiency of the present batteries and capacitors. The on-paper, all-carbon and large-scale MSC arrays provide an efficient, compact and sustainable solution to address the challenge in directly storing the high-voltage instantaneous electricity produced by mechanic energy harvesters, and are anticipated to substantially contribute to the development of entirely sustainable self-charging power systems for emerging electronics.

## 4.Methods

### Formation of PEDOT: PSS ink for DIW

The active materials in DIW inks comprise PEDOT:PSS (1.1 wt% water dispersion, Product No. 739 332, Sigma-Aldrich), electrochemical exfoliation graphene (EEG) and graphene quantum dots (GQD). The EEG and GQD were synthesized according to previous publications[13,32]. First, 10 mL EEG/Dimetylformamid (DMF) dispersion (15 mg mL$^{-1}$) was centrifuged at 3000 rpm for 5 min to remove the large graphene particles, and the harvested supernatant was further centrifuged at 13000 rpm for 30 min to separate the fine and few-layer EEG from the DMF. Second, the harvested EEG (about 40 mg) and 10 mg GQD were added into the mixture of 8 mL PEDOT: PSS and 2 mL ethylene glycol (99.5%, Product No. 1.09621, Sigma-Aldrich). The dispersion was sonicated for 30 min and stirred overnight to form a uniform ink. Finally, the ink was dried under vacuum at room temperature to attain the viscose inks with solid content of 3 wt % for DIW.

### MSCs fabrication

All the MSCs were fabricated on paper substrates, either on photopaper (HP, CR757A, glossy photo paper) or carton paper (Pure-Pak® classic carton for milk boxes).

### Mask-based MSC fabrication

To investigate the effect of EG doping on the WVW of the PEDOT:PSS-based MSCs, we use a mask-based process to fabricate the MSCs. First, for every doping concentration, a certain volume of EG was added into 0.5 mL PEDOT:PSS aqueous dispersion to attain the proper EG volume fraction $\phi_{EG}$ (ranging from 0% to 30%), followed by magnetic stirring for 10 min. Second, a Kapton tape was patterned into a mask with an opening (consisting of one center rectangle of $3\times6$ mm$^2$ and two extended rectangles of $6\times1.5$ mm$^2$ as the leads for external electrical connection, as shown in Supplementary Fig. 1d) by CO$_2$ laser (Universal Laser Inc.). The Kapton mask was pasted on a photopaper substrate, and 30 $\mu$L EG-doped PEDOT:PSS dispersion was dropped into the opening. After the dispersion dried, the Kapton mask was removed, and the remaining PEDOT:PSS at the center rectangle region was scratched by a knife into a pair of symmetric electrodes for the MSC. Finally, 10 $\mu$L high concentration electrolyte (0.5 mL PSSH + 0.14 mL H$_3$PO$_4$) was dropped on top of the center electrodes and dried to form a symmetric MSC for CV tests.

### DIW Printing of MSCs

The DIW printing procedure includes 3 steps, printing of non-gapped electrodes, laser scribing into the interdigitated electrodes and electrolyte deposition. For the non-gapped electrode printing, the 3 wt % PEDOT:PSS inks were printed with the FELIX BIOprinter (FELIXprinters, Netherlands) equipped with a 10 mL syringe and different diameter nozzles (200 $\mu$m for priting of MSC electrodes, 100 $\mu$m for printing of interconnects) on the photopaper or carton paper at the substrate temperature of 80 °C.

Then, a sub-picosecond laser (Spirit 1040-4-SHG, Spectra-Physics of Newport Corporation) with central wavelength of 520 nm was used to scribe the DIW printed non-gapped electrodes into interdigitated electrodes. A suitable laser power setting of 600 mW with repetition rate of 10 kHz was applied to ensure sufficient scribing of the electrode materials without damaging the paper substrate. During the scribing, a 3-axis linear motorized stage (XMS100, Newport) was used to move the MSCs at the speed of 500 $\mu$m/s.

Finally, the PSSH electrolytes are printed. There are two types of PSSH electrolyte inks for DIW and inkjet printing, respectively. The former is of high concentration and prepared through mixing 0.5mL poly(4-styrenesulfonic acid) solution (PSSH, Mw~75,000, 18 wt % in H$_2$O, product number: 561223, Sigma-Aldrich) with 0.14mL phosphoric acid (H$_3$PO$_4$, >_85%, Sigma-Aldrich, product number: 40278). The latter is of low concentration and prepared through mixing 0.2 mL PSSH with 0.5 mL deionized water, 0.5 mL ethylene glycol and 0.14 mL H$_3$PO$_4$. For individual MSCs, the high-concentration PSSH electrolyte ink was drop cast onto the electrodes and dried to form the gel electrolytes. For the MSC arrays, first, a commercial piezoelectric Dimatix Materials printer (DMP 2800, Dimatix-Fujifilm Inc.), equipped with a 10 pL cartridge (DMC-11610) was employed to print 4 layers of the low-concentration PSSH electrolyte ink to cover the interdigitated electrodes at a drop spacing of 30 $\mu$m. Second, for every MSC cell, 2 $\mu$L high-concentration PSSH electrolyte ink was deposited into to the center of the inkjet printed PSSH area with the FELIX BIOprinter, and spread evenly over the entire inkjet-printed area. Finally, the printed PSSH electrolytes dried at fume hood overnight to form well-patterned (self-assembled) gel electrolytes for the MSC arrays.

**DEG fabrication and characterization**

The DEG was fabricated according to the previous report[56]. A 3 cm × 4 cm Polytetrafluoroethylene film (PTFE, Sigma-Aldrich, 100 μm thick) was cleaned with acetone and deionized water. Then a piece of conductive copper tape with the same size was pasted on the back of the PTFE as the bottom electrode. A thin aluminum tape was pasted on the top side of PTFE as the top electrode. Both electrodes individually connect to external circuit by copper wires for measurement. A disposable infusion set (Jiangxi Fenglin Medical Appliances Co., Ltd, China) was used as the droplet generator and the condition was kept same (the droplet volume 50 μL, drop height 10 cm, sliding angle 35°, and impinging frequency 9 Hz).

The output voltage of DEG was measured by the oscilloscope (RSDS 1152CML+, RSPRO, Sweden) with a high-impedance (100 MΩ) probe after a rectifier (200 V, 0.8 A, MiniDIP SMD4, China). The output current of the DEG was measured using a modified shunt-resistor method, in which DEG connects in series with a 10 kΩ load resistor and 100 Ω shunt resistor. The oscilloscope was used to measure the voltage drop across the shunt resistor, and the current of DEG can be calculated from the obtained voltage by using Ohm's law.

**Electrochemical measurement and calculation**

All the electrochemical measurements of the individual MSCs and MSC arrays, including cyclic volumetry (CV), galvanostatic charge discharge (GCD) and electrochemical impedance spectroscopy (EIS) were carried out in a two-electrode system using an electrochemical working station Gamry Interface 1010E (Gamry Instruments Inc., Warminster PA, USA) connected with a Signatone S-1160 probe station equipped with S-725-PRM micropositioners (Signatone Corporation, Gilroy CA, USA), when the WVW was no more than 12.5 V. For WVW higher than 12.5 V, the CV and GCD measurements were conducted via the Keithley 4200A-SCS parameter analyzer (Tektronix, Inc.) equipped with a probe station (Cascade Microtech Summit 11000). Before the test, silver paste was applied on the two leads of MSCs and arrays for the external connection. All the areal capacitance is calculated based on the CV or GCD curves. For the CV curves, the following equation is used

$$C_{A,\text{CV}} = \frac{\int (i_c - i_d)dV}{2vAV},$$

where $V$, $v$, $i_c$, $i_d$ and $A$ refer to the WVW, scan rate, charging current, discharging current, and the footprint area of the devices (including the inter-finger gaps), respectively.

For the GCD curves, the following equation is used

$$C_{A,\text{GCD}} = \frac{I\Delta t}{AV}.$$

where $I$ and $\Delta t$ refer to the discharging current and discharging time, respectively.

The areal energy density ($E_A$) and power density ($P_A$) of the MSCs were calculated as the following equations.

$$E_A = \frac{C_{A,\text{CV}}V^2}{2},$$

and

$$P_A = \frac{E_A}{V/v}.$$

When the MSC arrays were charged by the DEG, the overall stored energy ($E_h$) was calculated by the discharge curves with

$$E_h = \frac{1}{2}It_dV_d,$$

where $I$, $t_d$ and $V_d$ refer to the discharging current, discharging time and discharging voltage window, respectively.

To quantify the ability to store/capture the high-power instantaneous electricity of our MSC arrays, we calculated the average voltage $U_{RMS}$ and average output power $P_{DEG}$ of DEG under different external load resistance. The test circuit diagram is in Supplementary Fig. 18.

$$U_{RMS} = \sqrt{\frac{\int U(t)^2 dt}{T}},$$

$$P_{DEG} = \frac{(U_{RMS})^2}{R}$$

Where $U(t)$, $T$ and $R$ refer to the measured voltage over time, the total time of the measurement and the total resistance, respectively. The total resistance is calculated by connecting the external load resistance in parallel with the internal resistance (100 MΩ) of the oscilloscope.

## Material Characterizations

The surface morphology of the printed PEDOT:PSS electrodes was characterized by SEM (Gemini Ultra 55, Zeiss, Germany). The viscosity of the DIW inks were measured by using a rotational rheometer (DHR-2, TA Instrument) with 25-mm diameter steel parallel-plate geometry at 25 °C.

## Acknowledgements

We thank Dr. Mattias Ekström (KTH) for kind help with the electrical characterization. We acknowledge the financial support from the Swedish Research Council (Grant No. 2019-04731), the European Commission (Grant No. 101070255, REFORM), and the Swedish

## Claims

1. A wave energy converter (100, 200) comprising:

   a liquid medium (110, 210),
   a droplet electricity generator arrangement (120, 220) comprising a primary droplet electricity generator (122), means for using ocean waves (300) to enable droplets of the liquid medium (110, 210) to engage with a triboelectric surface (122a, 122'a, 222a) of the primary droplet electricity generator (122, 222) to generate power, wherein the liquid medium (110, 210) is comprised within a closed system of the wave energy converter (100, 200).

2. The wave energy converter (100, 200) according to claim 1, wherein the droplet electricity generator arrangement (120, 220) comprises a plurality of primary droplet electricity generators (122, 122', 222).

3. The wave energy converter (100, 200) according to any preceding claim, wherein the liquid medium (110, 210) comprises water.

4. The wave energy converter (100) according to any preceding claim, wherein the droplets of the liquid medium (110) engage with the triboelectric surface (122a) by impinging it.

5. The wave energy converter (100) according to any preceding claim, wherein the means for using ocean waves (300) to enable droplets of the liquid medium (110) to engage with the triboelectric surface (122a, 122'a) of the primary droplet electricity generator (122) comprises a liquid pump (140).

6. The wave energy converter (100) according to claim 5, wherein the liquid pump is fixedly coupled to a fixture (400) or to mobile object such as a buoy (500).

7. The wave energy converter (100) according to any of claims 6 or 7 wherein the means for using ocean waves (300) to enable droplets of the liquid medium (110) to engage with the triboelectric surface (122a) of the primary droplet electricity generator (122) comprises a float (150) which is arranged to be movable in a vertical direction with the ocean waves (300) relative to the liquid pump (140).

8. The wave energy converter (100) according to claim 7, further comprising a restrictive part (152) for restricting the float (150) to only be movable along a vertical direction.

9. The wave energy converter (100) according to any preceding claim further wherein in the droplet electricity generator arrangement (120) comprises a primary droplet generator (121) for turning the liquid medium (110) into droplets.

10. The wave energy converter (100) according to claim 9, wherein the droplet electricity generator arrangement (120) further comprises a secondary droplet generator (123) for producing droplets of the liquid medium (110), and a secondary droplet electricity generator (124), wherein each of the secondary droplet generator (123) and the secondary droplet electricity generator (124) is positioned below the primary droplet electricity generator (122).

11. The wave energy converter (100) according to any preceding claim, wherein the droplet electricity generator arrangement (120) comprises:

a top tank (128) for holding at least a portion of the liquid medium (110) and which is positioned above the primary droplet electricity generator (122);
or
a bottom tank (129) for holding at least a portion of the liquid medium (110) and which is positioned below the primary droplet electricity generator (122);
or
a top tank (128) for holding at least a portion of the liquid medium (110) and which is positioned above the primary droplet electricity generator (122) and a bottom tank (129) for holding at least a portion of the liquid medium (110) and which is positioned below the primary droplet electricity generator (122).

12. The wave energy converter (100) according to claim 10, further comprising a pipe arrangement (160) for transporting the liquid medium (110) from the bottom tank (129) to the top tank (128).

13. The wave energy converter (100, 200) according to any preceding claim wherein droplets of the liquid medium (110, 210) engage with the triboelectric surface (122a, 222a) by sliding over it and wherein the triboelectric surface (122'a, 222a) of the primary droplet electricity generator (122, 222) has a tubular shape.

14. The wave energy converter (200) according to claim 13, where the tubular triboelectric surface (222a) of the primary droplet electricity generator (222) has a longitudinal extension from a first end to a second end, wherein the first end is open and the second end is closed.

15. The wave energy converter (200) according to claim 13 or 14, wherein the means for using ocean waves (300) to enable droplets of the liquid medium (210) to engage with the tubular triboelectric surface (222a) of the primary droplet electricity generator (220) comprises an oscillating water column chamber (270) arrangeable so that an internal air pressure in the oscillating water column chamber increases in response to an ocean wave (300) entering the oscillating water column chamber (270) and wherein the increase of air pressure in the oscillating water column chamber (270) pressurizes a droplet of the liquid medium (210) so to slide over the tubular triboelectric surface (222a) of the primary droplet electricity generator (222).

Fig. 1

Fig. 2

## Fig. 3

## Fig. 4a

312

313

313

313a

313b

313c

313d

## Fig. 4b

## Fig. 4c

314

315

315

## Fig. 4d

. . .

## Fig. 4e

PSSH/H$_3$PO$_4$

PEDOT:PSS

PEDOT:PSS

Substrate

## Fig. 4f

Fig. 5

Fig. 6

Fig. 7

Fig. 8

Fig. 9

Fig. 10

Fig. 11a

Fig. 11b

Europäisches
Patentamt
European
Patent Office
Office européen
des brevets

# EUROPEAN SEARCH REPORT

**Application Number**

EP 24 21 3107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 576 431 A (UNIV SOUTHWEST JIAOTONG) 30 March 2021 (2021-03-30) * Translation of the description, par. "Detailed ways"; figures 1,3 * | 1-4,9, 10,13 | INV. F03B13/18 F03B13/14 H02N1/04 |
| Y | WO 2023/067680 A1 (SOUNDPOWER CORP [JP]; HAYAMIZU KOHEI [JP] ET AL.) 27 April 2023 (2023-04-27) * figures 7,10 * | 1-9,11, 12 | |
| Y | CN 112 594 121 B (YE HAIZHOU) 7 June 2022 (2022-06-07) * Translation of the description, par. "Detailed ways"; figures * | 1-9,11, 12 | |
| A | CN 113 489 122 B (UNIV SOUTHWEST) 28 February 2023 (2023-02-28) * the whole document * | 1-15 | |
| A | CN 116 566 238 A (BEIJING INST NANOENERGY & NANOSYSTEMS) 8 August 2023 (2023-08-08) * Translation of the description of the Examples 1-3; figures * | 1-15 | **TECHNICAL FIELDS SEARCHED (IPC)** F03B H02N |

The present search report has been drawn up for all claims

| Place of search | Date of completion of the search | Examiner |
|---|---|---|
| Munich | 24 March 2025 | Di Renzo, Raffaele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 24 21 3107

This annex lists the patent family members relating to the patent documents cited in  the above-mentioned European search report.
The members are as contained in the European Patent Office EDP file on
The European Patent Office is in no way liable for these particulars which are merely given for the purpose of information.

24-03-2025

| Patent document cited in search report | | Publication date | Patent family member(s) | | Publication date |
|---|---|---|---|---|---|
| CN 112576431 | A | 30-03-2021 | NONE | | |
| WO 2023067680 | A1 | 27-04-2023 | AU | 2021470535 A1 | 18-04-2024 |
| | | | EP | 4421310 A1 | 28-08-2024 |
| | | | JP | 7162313 B1 | 28-10-2022 |
| | | | JP | WO2023067680 A1 | 27-04-2023 |
| | | | US | 2024263607 A1 | 08-08-2024 |
| | | | WO | 2023067680 A1 | 27-04-2023 |
| CN 112594121 | B | 07-06-2022 | NONE | | |
| CN 113489122 | B | 28-02-2023 | NONE | | |
| CN 116566238 | A | 08-08-2023 | NONE | | |

EPO FORM P0459

For more details about this annex : see Official Journal of the European Patent Office, No. 12/82